(19) Europäisches Patentamt
European Patent Office
Office européen des brevets

(11) **EP 1 901 225 A1**

(12) **EUROPEAN PATENT APPLICATION**
published in accordance with Art. 153(4) EPC

(43) Date of publication:
**19.03.2008 Bulletin 2008/12**

(21) Application number: **06746230.9**

(22) Date of filing: **10.05.2006**

(51) Int Cl.:
**G06T 1/00** (2006.01)   **G01B 11/00** (2006.01)
**G01B 11/24** (2006.01)   **G01C 3/06** (2006.01)
**G06T 7/20** (2006.01)   **G08G 1/16** (2006.01)
**H04N 7/18** (2006.01)

(86) International application number:
**PCT/JP2006/309420**

(87) International publication number:
**WO 2006/121088 (16.11.2006 Gazette 2006/46)**

(84) Designated Contracting States:
**DE FR GB**

(30) Priority: **10.05.2005   JP 2005137848**
**10.05.2005   JP 2005137852**
**18.05.2005   JP 2005145824**

(71) Applicant: **Olympus Corporation**
**Tokyo 151-0072 (JP)**

(72) Inventors:
• **IWAKI, Hidekazu**
**c/o OLYMPUS CORPORATION**
**Tokyo 151-0072 (JP)**

• **KOSAKA, Akio**
**c/o OLYMPUS CORPORATION**
**Tokyo 151-0072 (JP)**
• **MIYOSHI, Takashi**
**c/o OLYMPUS CORPORATION**
**Tokyo 151-0072 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **IMAGE PROCESSING DEVICE, IMAGE PROCESSING METHOD, AND IMAGE PROCESSING PROGRAM**

(57)   When processing a picked up image and calculating a distance to a predetermined object such as a vehicle ahead and the like, the present invention can reduce a load of calculation processing, output the distance information at a higher speed, and process various information included in the picked up image in a multiple way.

In order to achieve the above object, it comprises an imaging unit which picks up a predetermined view and creates an image, a processing region setting unit which sets a region to be processed in the image created by the imaging unit, and a processing calculating unit which performs a predetermined processing calculation on the region set by the processing region setting unit.

FIG.1

EP 1 901 225 A1

**Description**

TECHNICAL FIELD

The invention relates to an image processing apparatus, an image processing method, and an image processing program for performing image processing on an image created by picking up a predetermined view.

BACKGROUND ART

Conventionally, there has been known a vehicle-to-vehicle distance detecting device which is mounted on a vehicle such as an automobile, for detecting a distance between this vehicle and a vehicle ahead while processing the picked-up image of the vehicle ahead running in front of this vehicle (for example, refer to Patent Document 1). This vehicle-to-vehicle distance detecting device sets a plurality of measurement windows at predetermined positions of the image in order to capture the vehicle ahead on the image, processes the images within the respective measurement windows, calculates a distance to an arbitrary object, and recognizes the pickup position of the vehicle ahead according to the calculated result and the positional information of the measurement windows.

Further, there has been known a technique for imaging a proceeding direction of a vehicle in order to detect a road situation in the proceeding direction and recognizing a predetermined object according to the picked-up images at driving a vehicle (for example, refer to Patent Document 2). In this technique, the picked-up images are used to recognize a lane dividing line such as a white line and a central divider on the road where the vehicle is running.

Patent Document 1: Japanese Patent No. 2635246
Patent Document 2: Japanese Patent No.3290318

DISCLOSURE OF THE INVENTION

PROBLEMS TO BE SOLVED BY THE INVENTION

The above conventional technique disclosed in Patent Document 1, however, captures the vehicle ahead at an unclear image pickup position and therefore, it is necessary to set the measurement windows properly to cover the whole region of an image. Since a distance is calculated after processing the whole region of the image, a load of calculation is enormous and it takes a long time.

In the conventional technique disclosed in Patent Document 2, however, the processing is specialized in recognition of white line and the like and therefore it is impossible to process various information included in the picked-up image in a multiple way.

Taking the above into consideration, an object of the present invention is to provide an image processing apparatus, an image processing method, and an image processing program which can reduce a load of calculation, output distance information at high speed, and process various information included in the picked-up images in a multiple way, when processing the picked-up images and calculating a distance to a predetermined object such as a vehicle ahead.

MEANS FOR SOLVING PROBLEM

To solve the problems and achieve the object, an image processing apparatus according to an aspect of the present invention includes an imaging unit that picks up a predetermined view to create an image; a processing region setting unit that sets a region to be processed in the image created by the imaging unit; and a processing calculating unit that performs a predetermined processing calculation on the region set by the processing region setting unit.

The invention may further include an identification unit that identifies a region occupied by an object included in the view and a type of the object based on an image signal group included in the image created by the imaging unit. The processing region setting unit may include a calculation range setting unit that sets a calculation range for calculating a distance to the object based on an identification result by the identification unit. The processing calculating unit may include a distance calculation unit that performs a distance calculation in the calculation range set by the calculation range setting unit.

In the invention, the identification unit may obtain vertical direction information indicating a boundary of the object within the view in a vertical direction and horizontal direction information indicating the boundary of the object within the view in a horizontal direction, based on the image signal group, and identify a region occupied by the object within the view by combination of the vertical direction information and the horizontal direction information.

In the invention, the identification unit may identify the type of the object based on the region occupied by the object within the view.

In the invention, the calculation range setting unit may set the calculation range based on the region occupied by a predetermined type of the object within the view, of types of objects identified by the identification unit.

In the invention, the calculation range setting unit may set the calculation range corresponding to a region obtained by adding a predetermined margin to the region occupied by the object identified by the identification unit within the view.

In the invention, the imaging unit may create a first image signal group picked up through a first optical path and a second image signal group picked up through a second optical path. The processing calculating unit may detect from the second image signal group an image signal which matches an arbitrary image signal of the first image signal group. The processing calculating unit may calculate a distance to the object based on a shift amount from the arbitrary image signal in the detected image signal.

In the invention, the identification unit may identify the region occupied by the object within the view and the type of the object based on one of the first image signal group and the second image signal group.

The invention may further include a distance information creating unit that calculates a distance from an imaging position of the imaging unit to all or some component points forming the image, and creates distance information including the calculated distance; and a processing selecting unit that selects an image processing method corresponding to the distance information created by the distance information creating unit, from a plurality of image processing methods. The processing calculating unit may include an image processing unit that performs the image processing on the image by using the image processing method selected by the processing selecting unit.

In the invention, the processing region setting unit may include a distance image creating unit that creates a distance image by superimposing the distance information created by the distance information creating unit on the image, and set closed regions based on the created distance information, the closed regions being different for each set of component points of the image within a predetermined range of distance from the imaging position.

In the invention, the processing selecting unit may select an image processing method for each of the closed regions set by the distance image creating unit.

The invention may further include an object detecting unit that detects a predetermined object for each of the closed regions set by the distance image creating unit.

The invention may further include a selecting method changing unit that changes a method for selecting the image processing method in the processing selecting unit.

The invention may further include a storage unit which stores therein the image created by the imaging unit together with time information concerning the image; an object detecting unit that detects a target object for an image processing from the image picked up by the imaging unit; a distance calculating unit that calculates a distance from an imaging position of the imaging unit to the target object detected by the object detecting unit; and a position predicting unit that extracts at least two images picked up at different times from the images stored in the storage unit, and predicts a relative position of the target object with respect to the movable object at an elapse of predetermined time by using the extracted at least two images and the distance to the target object in each of the images. The processing region setting unit may set a processing region to be subjected to the image processing, based on a prediction result by the position predicting unit. The processing calculating unit may include an image processing unit that performs a predetermined image processing on the processing region set by the processing region setting unit.

The invention may further include a model forming unit that forms a three-dimensional space model to be projected on the image using the prediction result by the position predicting unit. The processing region setting unit may set the processing region by projecting the three-dimensional space model formed by the model forming unit on the image.

The invention may further include a processing changing unit that changes a method for the image processing to be performed on the processing region set by the processing region setting unit.

The invention may further include an output unit that displays and outputs an image obtained by superimposing a three-dimensional movement of the target object over time detected by the object detecting unit on the image in time series.

The invention may further include a movement situation detecting unit that detects a movement situation including a position or a speed of the movable object. The position predicting unit may use the position or the speed of the movable object detected by the movement situation detecting unit in order to predict the relative position of the target object with respect to the movable object.

The invention may further include a movement situation detecting unit that detects the movement situation including the position of the movable object; and a map information storage unit that stores therein three-dimensional map information including surroundings of the region where the movable object is moving. The position predicting unit may read out from the map information storage unit the map information near a current position of the movable object detected by the movement situation detecting unit, and refer to the information, in order to predict the relative position of the target object with respect to the movable object.

The invention may further include an external information detecting unit that detects external information outside of the movable object. The position predicting unit may use the information outside of the movable object detected by the external information detecting unit, in order to predict the relative position of the target object with respect to the movable object.

In the invention, the imaging unit may include a pair of imaging optical systems; and a pair of image pickup devices that convert optical signals output by the pair of the imaging optical systems into electric signals.

In the invention, the imaging unit may include a pair of light guiding optical systems; and an image pickup device that has imaging regions corresponding respectively to the light guiding optical systems, and converts the optical signals guided by the respective light guiding optical systems into electric signals in the respective imaging regions.

In the invention, the image processing apparatus may be mounted on a vehicle.

An image processing method according to another aspect of the present invention includes an imaging step of picking up a predetermined view to create an image; a processing region setting step of setting a region to be processed in the image created in the imaging step; and a processing calculating step of performing a predetermined processing calculation on the region set in the processing region setting step.

The invention may further include an identification step of identifying a region occupied by an object included in the view and a type of the object based on an image signal group included in the image created in the imaging step. In the processing region setting step, a calculation range for calculating a distance to the object may be set based on an identification result in the identification step. In the processing calculating step, a distance calculation may be performed in the calculation range set in the processing region setting step.

The invention further include a distance information creating step of calculating a distance from an imaging position in the imaging step to all or some component points forming the image, and creating distance information including the calculated distance; and a processing selecting step of selecting an image processing method corresponding to the distance information created in the distance information creating step, from a plurality of image processing methods. In the processing calculating step, the image processing may be performed on the image by using the image processing method selected in the processing selecting step.

The invention may further include a storing step of storing the image created in the imaging step together with time information concerning the image; an object detecting step of detecting a target object for an image processing from the image picked up in the imaging step; a distance calculating step of calculating a distance from an imaging position in the imaging step to the target object detected in the object detecting step; and a position predicting step of extracting at least two images picked up at different times from the images stored in the storing step, and predicting a relative position of the target object with respect to the movable object at an elapse of predetermined time by using the extracted at least two images and the distance to the target object in each of the images. In the processing region setting step, a processing region to be subjected to the image processing may be set based on a prediction result in the position predicting step. In the processing calculating step, a predetermined image processing may be performed on the processing region set in the processing region setting step.

An image processing program according to still another aspect of the present invention is for performing an image processing on an image created by an imaging unit that picks up a predetermined view to create the image, and includes a processing region setting step of setting a region to be processed in the image; and a processing calculating step of performing a predetermined processing calculation on the region set in the processing region setting step.

The invention may further include an identification step of identifying a region occupied by an object within the view and a type of the object, based on each image signal group included in the image created by the imaging unit. In the processing region setting step, a calculation range for calculating a distance to the object may be set based on an identification result in the identification step. In the processing calculation step, a distance calculation may be performed in the calculation range set in the processing region setting step.

The invention may further include a distance information creating step of calculating a distance from an imaging position of the imaging unit to all or some component points forming the image, and creating distance information including the calculated distance, and a processing selecting step of selecting an image processing method corresponding to the distance information created in the distance information creating step, from a plurality of image processing methods. In the processing calculation step, the image processing may be performed on the image by using the image processing method selected in the processing selecting step.

The invention may further include a storing step of storing the image created by the imaging unit together with time information concerning the image; an object detecting step of detecting a target object for an image processing from the image picked up by the imaging unit; a distance calculating step of calculating a distance from an imaging position of the imaging unit to the target object detected in the object detecting step; and a position predicting step of extracting at least two images picked up at different times from the images stored in the storing step, and predicting a relative position of the target object with respect to the movable object at an elapse of predetermined time by using the extracted at least two images and the distance to the target object in each of the images. In the processing region setting step, a processing region to be subjected to the image processing may be set based on a prediction result in the position predicting step. In the processing calculating step, a predetermined image processing may be performed on the processing region set in the processing region setting step.

EFFECT OF THE INVENTION

The invention can provide an image processing apparatus, an image processing method, and an image processing program which can reduce the load of calculation, output distance information at high speed, and process various information included in the picked-up images in a multiple way, when processing the picked-up images and calculating a distance to a predetermined object such as a vehicle ahead.

BRIEF DESCRIPTION OF THE DRAWINGS

FIG.1 is a block diagram showing the structure of an image processing apparatus according to a first embodiment of the invention;

FIG. 2 is a flow chart showing the procedure up to the processing of outputting distance information in the image processing apparatus shown in FIG. 1;
FIG. 3 is an explanatory view conceptually showing the imaging processing using a stereo camera;
FIG. 4 is an explanatory view showing a correspondence between the right and left image regions before rectification processing;
FIG. 5 is an explanatory view showing a correspondence between the right and left image regions after rectification processing;
FIG. 6 is a flow chart showing the procedure of the identification processing shown in FIG. 2;
FIG. 7 is a view showing an example of the image picked up by an imaging unit of the image processing apparatus shown in FIG. 1;
FIG. 8 is a view showing an example of a vertical edge extracting filter;
FIG. 9 is a view showing an example of a horizontal edge extracting filter;
FIG. 10 is a view showing an example of the result of extracting edges by the vertical edge extracting filter shown in FIG. 8;
FIG. 11 is a view showing an example of the result of extracting edges by the horizontal edge extracting filter shown in FIG. 9;
FIG. 12 is a view showing the result of integrating the edge extracted images shown in FIG. 10 and FIG. 11;
FIG. 13 is a view showing an example of the result output through the region dividing processing shown in FIG. 6;
FIG. 14 is a view for use in describing the template matching performed in the object identification processing shown in FIG. 6;
FIG. 15 is a view showing an example of the result output through the identification processing shown in FIG. 6;
FIG. 16 is a flow chart showing the procedure of the calculation range setting processing shown in FIG. 2;
FIG. 17 is a view for use in describing the processing of adding a margin in the calculation range setting shown in FIG. 16;
FIG. 18 is a view showing an example of the result output through the calculation range setting processing shown in FIG. 16;
FIG. 19 is a view showing an example of the result output through the distance calculation processing shown in FIG. 2;
FIG. 20 is a timing chart for use in describing the timing of the processing shown in FIG. 2;
FIG. 21 is a block diagram showing the structure of an image processing apparatus according to a second embodiment of the invention;
FIG. 22 is a block diagram showing the structure of an image processing apparatus according to a third embodiment of the invention;
FIG. 23 is a flow chart showing the outline of an image processing method according to the third embodiment of the invention;
FIG. 24 is a view showing the output example of the distance image;
FIG. 25 is a view showing the correspondence in recognizing an object according to a distance as an example of the selected image processing method;
FIG. 26 is a view showing a display example when image processing for detecting a road is performed;
FIG. 27 is a view showing a display example when image processing for detecting a white line is performed;
FIG. 28 is a view showing a display example when image processing for detecting a vehicle is performed;
FIG. 29 is a view showing a display example when image processing for detecting a human is performed;
FIG. 30 is a view showing a display example when image processing for detecting a sign is performed;
FIG. 31 is a view showing a display example when image processing for detecting the sky is performed;
FIG. 32 is a block diagram showing the structure of an image processing apparatus according to a fourth embodiment of the invention;
FIG. 33 is a flow chart showing the outline of an image processing method according to the fourth embodiment of the invention;

FIG. 34 is an explanatory view visually showing the prediction processing of the future position of a vehicle;

FIG. 35 is a view showing one example of setting a processing region;

FIG. 36 is a view showing one example of the image processing;

FIG. 37 is a block diagram showing the structure of an image processing apparatus according to a fifth embodiment of the invention;

FIG. 38 is a flow chart showing the outline of an image processing method according to the fifth embodiment of the invention;

FIG. 39 is a view showing the output example of an image in the image processing apparatus according to Fifth embodiment of the invention;

FIG. 40 is a view showing an example of forming a three-dimensional space model indicating a region where this vehicle can drive;

FIG. 41 is a view showing a display example when the three-dimensional space model indicating the region where this vehicle can drive is projected on the image;

FIG. 42 is a view showing an example of forming the three-dimensional space model indicating a region where the vehicle ahead can drive;

FIG. 43 is a view showing a display example when the three-dimensional space model indicating the region where the vehicle ahead can drive is projected on the image;

FIG. 44 is a block diagram showing the structure of an image processing apparatus according to one variant of the fifth embodiment of the invention;

FIG. 45 is a block diagram showing the partial structure of an image processing apparatus according to a sixth embodiment of the invention; and

FIG. 46 is a view showing one example of an image picked up by the imaging unit shown in FIG. 45.

EXPLANATIONS OF LETTERS OR NUMERALS

| | |
|---|---|
| 1, 2, 3, 4, 5, 6 | Image processor |
| 10 | Imaging unit |
| 11a | Right camera |
| 11b | Left camera |
| 12a, 12b | Lens |
| 13a, 13b | Image pickup device |
| 14a, 14b | A/D converting unit |
| 15a, 15b | Frame memory |
| 17, 116, 601 | Image |
| 20, 220, 320, 420, 520 | Image analyzing unit |
| 21 | Processing control unit |
| 22 | Identification unit |
| 22a, | 22b Edge extracted image |
| 22c | Edge integrated image |
| 22d | Region divided image |
| 23 | Calculation range setting unit |
| 23a | Calculation range information |
| 24 | Distance calculation unit |
| 25 | Memory |
| 30, 130, 330, 430 | Control unit |
| 40 | Output unit |
| 50, 350, 450 | Storage unit |
| 51 | Image information |
| 52 | Template information |
| 53, 53a, 53b | Identification information |
| 54, 54a | Distance information |
| 60 | Movement situation detecting unit |
| 70 | External information detecting unit |
| 110 | Imaging unit |
| 111 | Camera |

| 112 | Lens |
|---|---|
| 113 | Image pickup device |
| 114 | A/D converting unit |
| 115 | Frame memory |
| 116a | Right image |
| 116b | Left image |
| 119 | Stereo adaptor |
| 119a, 119b, 119c, 119d | Mirror |
| 230, 423, 3220 | Processing region setting unit |
| 240, 3230, 4240 | Processing calculating unit |
| 260 | Radar |
| 301 | Distance image |
| 321 | Distance information creating unit |
| 322 | Distance image creating unit |
| 323, | 424 Image processing unit |
| 331 | Processing selecting unit |
| 351 | Image data |
| 352 | Distance information |
| 353 | Image processing method |
| 354, 454 | Template |
| 401, 402, 403, 404, 405, 406, 501, 502, 503, 602, 603 | Display image |
| 421 | Object detecting unit |
| 422 | Distance calculating unit |
| 423 | Processing region setting unit |
| 425 | Space model forming unit |
| 451 | Image data |
| 452, $452_{n-1}$, $452_n$ | Distance/time information |
| 453 | Processing content |
| 455 | Basic model |
| 601 | Image |
| C, C1, C2, Ca, Cb | Vehicle |
| D | Processing region |
| H1 | Human |
| Md1, Md2 | Three-dimensional space model |
| Rd | Road |
| Sig | Traffic signal |

BEST MODES FOR CARRYING OUT THE INVENTION

Best modes for carrying out the invention (hereinafter, referred to as embodiment) will be described in detail referring to the accompanying drawings.

First embodiment

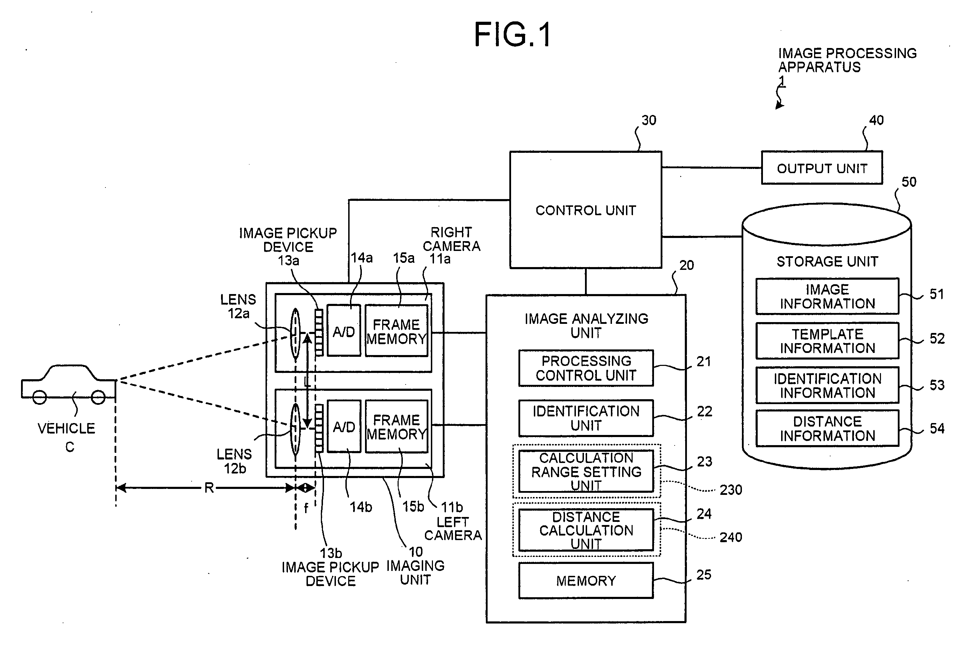

FIG. 1 is a block diagram showing the structure of an image processing apparatus according to a first embodiment of the invention. An image processing apparatus 1 shown in FIG. 1 is an electronic device having a predetermined pickup view, comprising an imaging unit 10 which picks up an image corresponding to the pickup view and creates an image signal group, an image analyzing unit 20 which analyzes the image signal group created by the imaging unit 10, a control unit 30 which controls the whole processing and operation of the image processing apparatus 1, an output unit 40 which outputs various kinds of information including distance information, and a storage unit 50 which stores the various information including the distance information. The imaging unit 10, the image analyzing unit 20, the output unit 40, and the storage unit 50 are electrically connected to the control unit 30. This connection may be wired or wireless connection.
The imaging unit 10 is a stereo camera of compound eyes, having a right camera 11a and a left camera 11b aligned on the both sides. The right camera 11a includes a lens 12a, an image pickup device 13a, an analog/digital (A/D) converter 14a, and a frame memory 15a. The lens 12a concentrates the lights from an arbitrary object positioned within a predetermined imaging view on the image pickup device 13a. The image pickup device 13a is a CCD or a CMOS, which detects the lights from the object concentrated by the lens 12a as an optical signal, converts the above into electric signal that is an analog signal, and outputs it. The A/D converting unit 14a converts the analog signal output by the image pickup device 13a into digital signal and outputs it. The frame memory 15a stores the digital signal output by the A/D converting unit 14a and outputs a digital signal group corresponding to one pickup image as image information that is an image signal group corresponding to the imaging view whenever necessary. The left camera 11b has the same structure as the right camera 11a, comprising a lens 12b, an image pickup device 13b, an A/D converting unit 14b, and a frame memory 15b. The respective components of the left camera 11b have the same functions as the respective components of the right camera 11a.

A pair of the lenses 12a and 12b included in the imaging unit 10 as an image pickup optical system are positioned at a distance of L in parallel with respect to the optical axis. The image pickup devices 13a and 13b are respectively positioned at a distance of f from the lenses 12a and 12b on the optical axis. The right camera 11a and the left camera 11b pick up images of the same object at the different positions through the different optical paths. The lenses 12a and 12b are generally formed in combination of a plurality of lenses and they are corrected for a good aberration such as distortion.

The image analyzing unit 20 includes a processing control unit 21 which controls the image processing, an identification unit 22 which identifies a region the imaged object occupies within the imaging view and the type of this object, a calculation range setting unit 23 which sets a calculation range to be processed by a distance calculation unit 24 according to the identification result, the distance calculation unit 24 which calculates a distance to the imaged object by processing the image signal group, and a memory 25 which temporarily stores various information output by each unit of the image analyzing unit 20. Here, the calculation range setting unit 23 constitutes a part of a processing region setting unit 230 which sets a region to be processed in the image created by the imaging unit 10. The distance calculation unit 24 constitutes a part of a processing calculating unit 240 which performs a predetermined processing calculation on the region set by the processing region setting unit 230.

The distance calculation unit 24 detects a right image signal matching with a left image signal of a left image signal group output by the left camera 11b, of the right image signal group output by the right camera 11a and calculates a distance to an object positioned within the imaging view of this detected right image signal, based on a shift amount that is a distance from the corresponding left image signal. In other words, the calculation unit 24 superimposes the right image signal group created by the right camera 11a on the left image signal group created by the left camera 11b with reference to the positions of the optical axes of the respective image pickup optical systems, detects an arbitrary left image signal of the left image signal group and a right image signal of the right image signal group most matching this left image signal, obtains a shift amount I that is a distance on the image pickup device from the corresponding left image signal to the right image signal, and calculates the distance R, for example, from the imaging unit 10 to a vehicle C in FIG. 1, by using the following formula (1) based on the principle of triangulation. The shift amount I may be obtained according to the number of pixels and the pitch of pixel of the image pickup device.

$$R = f \cdot L / I \tag{1}$$

The distance calculation unit 24 calculates a distance to an object corresponding to an arbitrary image signal within the calculation range and creates the distance information while bringing the calculated distance to the object into correspondence with the position of the object within the image. Here, although the explanation has been made by using a parallel stereo for the sake of simplicity, the optical axes may cross with each other at angles, the focus distance may be different, or the positional relation of the image pickup device and the lens may be different.
This may be calibrated and corrected through rectification, hence to realize a parallel stereo through calculation.

The control unit 30 has a CPU which executes a processing program stored in the storage unit 50, hence to control various kinds of processing and operations performed by the imaging unit 10, the image analyzing unit 20, the output unit 40, and the storage unit 50.

The output unit 40 outputs various information including the distance information. For example, the output unit 40 includes a display such as a liquid display and an organic EL (Electroluminescence) display, hence to display various kinds of displayable information including the image picked up by the imaging unit 10 together with the distance information. Further, it may include a sound output device such as a speaker, hence to output various kinds of sound information such as the distance information and a warning sound based on the distance information.

The storage unit 50 includes a ROM where various information such as a program for starting a predetermined OS and an image processing program is stored in advance and a RAM for storing calculation parameters of each processing and various information transferred to and from each component. Further, the storage unit 50 stores image information 51 picked up by the imaging unit 10, template information 52 used by the identification unit 22 in order to identify the type of an object, identification information 53 that is the information of the region and the type of an object identified by the identification unit 22, and distance information 54 calculated and created by the distance calculation unit 24.

The above-mentioned image processing program may be recorded into a computer-readable recording medium including hard disk, flexible disk, CD-ROM, CD-R, CD-RW, DVD-ROM, DVD±R, DVD±RW, DVD-RAM, MO disk, PC card, xD picture card, smart media, and the like, for widespread distribution.

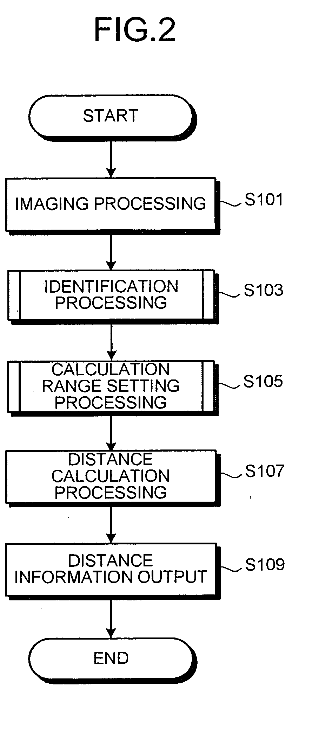

The processing performed by the image processing apparatus 1 will be described according to the flow chart of FIG. 2. FIG. 2 is the flow chart showing the procedure up to the processing of outputting the distance information corresponding to the image picked up by the image processing apparatus 1.

As illustrated in FIG. 2, the imaging unit 10 performs the imaging processing of picking up a predetermined view and outputting the created image signal group to the image analyzing unit 20 as the image information (Step S101). Specifically, the right camera 11a and the left camera 11b of the imaging unit 10 concentrate lights from each region within each predetermined view by using the lenses 12a and 12b, under the control of the control unit 30.

The lights concentrated by the lenses 12a and 12b form images on the surfaces of the image pickup devices 13a and 13b and they are converted into electric signals (analog signals). The analog signals output by the image pickup devices 13a and 13b are converted into digital signals by the A/D converting units 14a and 14b and the converted digital signals are temporarily stored in the respective frame memories 15a and 15b. The digital signals temporarily stored in the respective frame memories 15a and 15b are transmitted to the image analyzing unit 20 after an elapse of predetermined time.

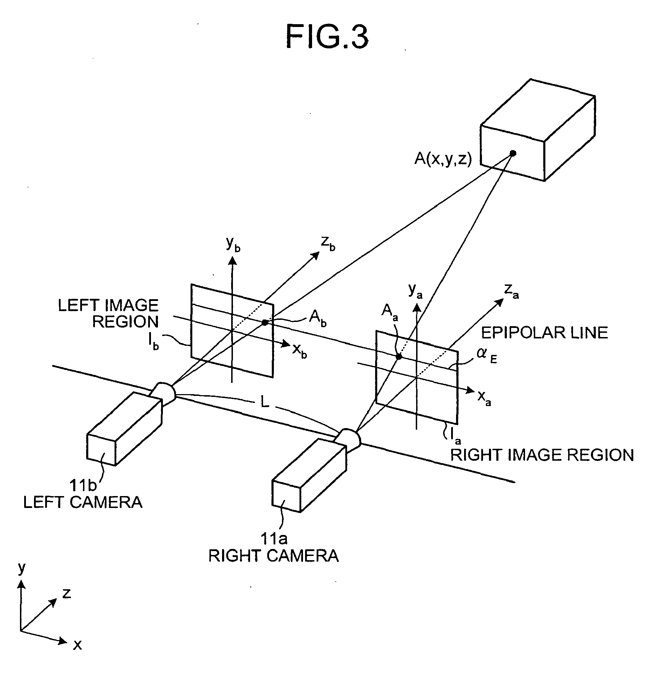

FIG. 3 is an explanatory view conceptually showing the imaging processing by a stereo camera of compound eyes. FIG. 3 shows the case where the optical axis $z_a$ of the right camera 11a is in parallel with the optical axis $z_b$ of the left camera 11b. In this case, the point corresponding to the point $A_b$ of the left image region $I_b$ in the coordinate system specific to the left camera (left camera coordinate system) exists on the straight line $\alpha_E$ (epipolar line) within the right image region $I_a$ in the coordinate system specific to the right camera (right camera coordinate system). Although FIG. 3 shows the case where the corresponding point is searched for by the right camera 11a with reference to the left camera 11b, the right camera 11a may be used as a reference on the contrary.

After the imaging processing in Step S101, the identification unit 22 performs the identification processing of identifying a region occupied by a predetermined object and the type of this object, referring to the image information and creating the identification information including the corresponding region and type of the object (Step S103). Then, the calculation range setting unit 23 performs the calculation range setting processing of setting a calculation range for calculating a distance, referring to this identification information (Step S105).

Then, the distance calculation unit 24 performs the distance calculation processing of calculating a distance to the object according to the image signal group corresponding to the set calculation range, creating the distance information including the calculated distance and its corresponding position of the object on the image, and outputting the above information to the control unit 30 (Step S107).

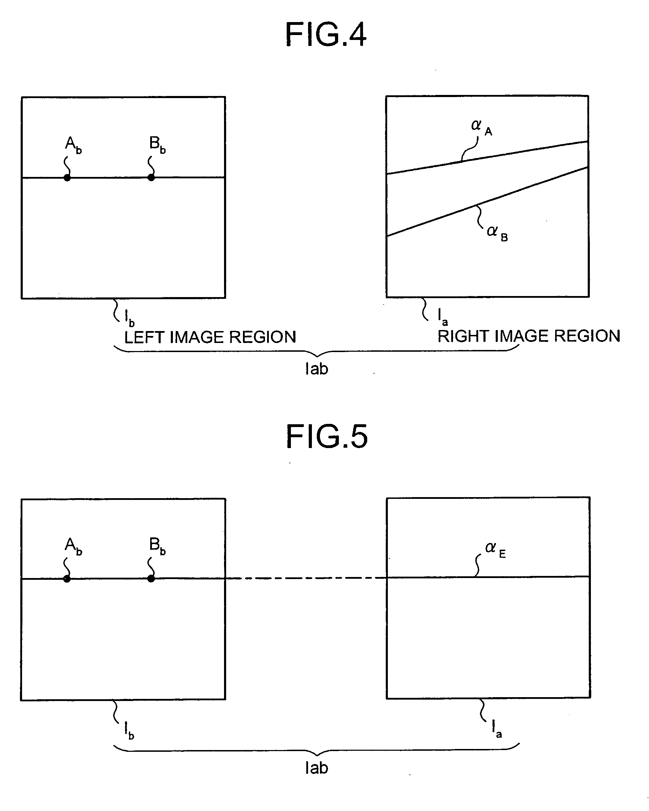

In order to perform the distance calculation in Step S107, the coordinate values of all or one of the pixels within the pickup view by using the right and left camera coordinate systems have to be calculated. Prior to this, the coordinate values are calculated in the left and right camera coordinate systems and the both coordinate values are brought into correspondence (a corresponding point is searched). When reconfiguring the three dimensions through this corresponding point search, it is desirable that a pixel point positioned on an arbitrary straight line passing through the reference image is positioned on the same straight line even in the other image (epipolar constraint). This epipolar constraint is not always satisfied, but, for example, in the case of the stereo image region $I_{ab}$ shown in FIG. 4, the point of the right image region $I_a$ corresponding to the point $A_b$ of the reference left image region $I_b$ exists on the straight line $\alpha_A$, while the point of the right image region $I_a$ corresponding to the point $B_b$ of the left image region $I_b$ exists on the straight line $\alpha_B$.

As mentioned above, when the epipolar constraint is not satisfied, the search range is not narrowed down but the calculation amount for searching for a corresponding point becomes enormous. In this case, the image analyzing unit 20 performs the processing (rectification) of normalizing the right and left camera coordinate systems in advance for converting it into the situation satisfying the epipolar constraint. FIG. 5 shows the correspondence relationship between the right and left image regions after the rectification. When the epipolar constraint is satisfied as shown in FIG. 5, the search range can be narrowed down to the epipolar line $\alpha_E$, thereby reducing the calculation amount for the corresponding point search.

One example of the corresponding point search will be described. At first, a local region is set near a notable pixel in the reference left image region $I_b$, the same region as this local region is provided on the corresponding epipolar line $\alpha_E$ in the right image region $I_a$. While scanning the local region of the right image region $I_a$ on the epipolar line $\alpha_E$, a local region having the highest similarity to the local region of the left image region $I_b$ is searched for. As the result of the search, the center point of the local region having the highest similarity is defined as the corresponding point of the pixel in the left image region $I_b$.

As the similarity for use in this corresponding point search, it is possible to adopt the sum of absolute difference between the pixel points within the local regions (SAD: Sum of Absolute Difference), the sum of squared difference between the pixel points within the local regions (SSD: Sum of Squared Difference), or the normalized cross correlation between the pixel points within the local regions (NCC: Normalized Cross Correlation). When using the SAD or SSD, of these, a point having the minimum value is defined as the highest similarity point, while when using the NCC, a point having the maximum value is defined as the highest similarity point.

Sequentially to the above Step S107, the control unit 30 outputs this distance information and the predetermined distance information based on this distance information to the output unit 40 (Step S109) and finishes a series of processing. The control unit 30 stores the image information 51, the identification information 53, and the distance information 54, that is the information created in each step, into the storage unit 50 whenever necessary. The memory 25 temporarily stores the information output and input in each step and the respective units of the image analyzing unit 20 output and input the information through the memory 25.

In the series of the above processing, the identification processing may be properly skipped to speed up the cycle of the processing, by predicting a region occupied by a predetermined object based on the time series identification information stored in the identification information 53. The series of the above processing will be repeated unless a person on the vehicle with the image processing apparatus 1 mounted thereon instructs to finish or stop the predetermined processing.

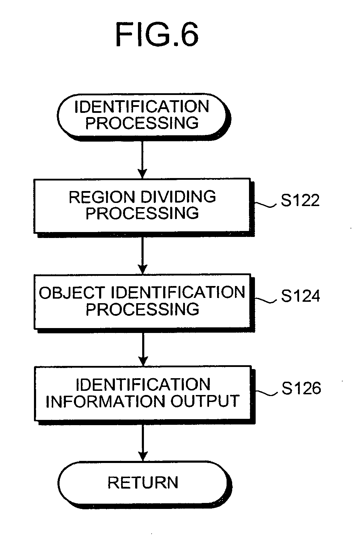

Next, the identification processing of Step S103 shown in FIG. 2 will be described. FIG. 6 is a flow chart showing the procedure of the identification processing. As illustrated in FIG. 6, the identification unit 22 performs the region dividing processing of dividing the image into a region corresponding to the object and the other region (Step S122), referring to the image information created by the imaging unit 10, performs the object identification processing of identifying the type of the object and creating the identification information including the corresponding region and type of the identified object (Step S124), outputs the identification information (Step S126), and returns to Step S103.

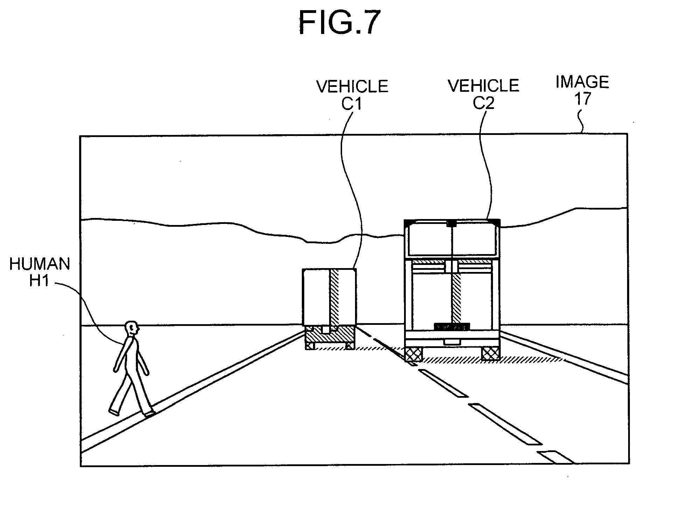

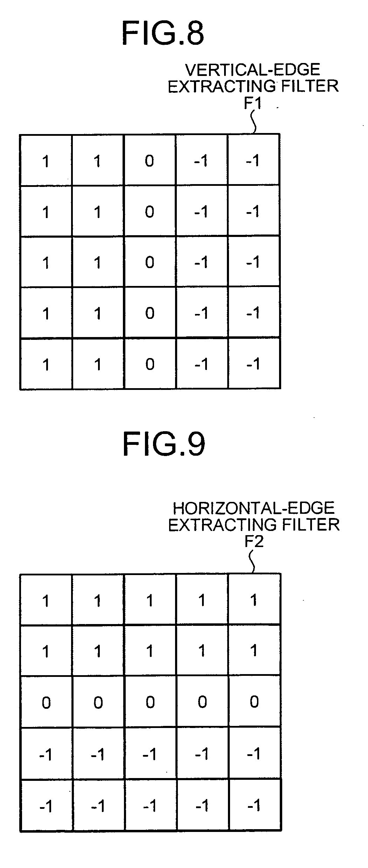

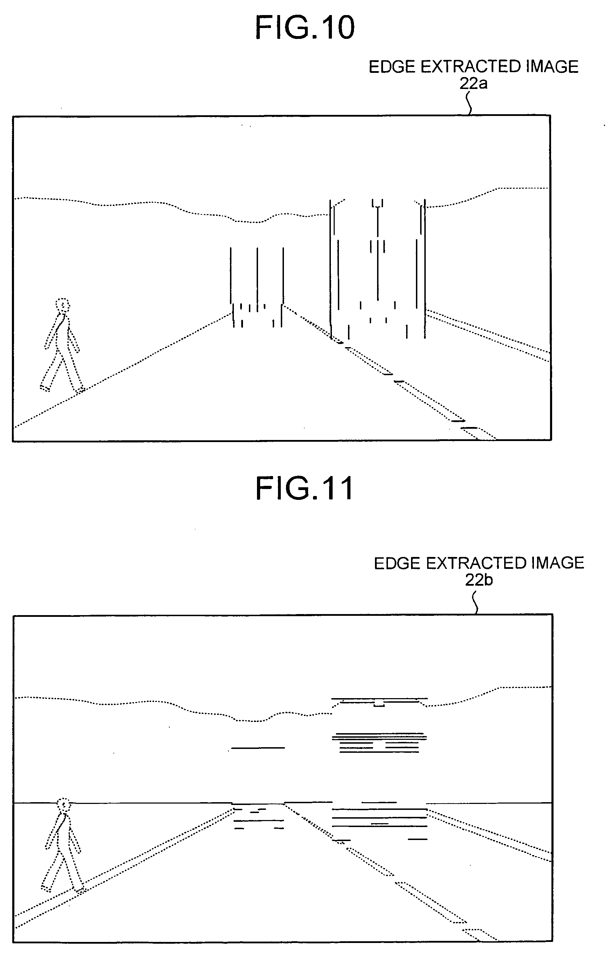

In the region dividing processing shown in Step S122, the identification unit 22 creates an edge extracted image that is an image of the extracted edges indicating the boundary of an arbitrary region, based on the images picked up by the right camera 11a or the left camera 11b of the imaging unit 10. Specifically, the identification unit 22 extracts the edges, for example, based on the image 17 shown in FIG. 7, by using the edge extracting filters F1 and F2 respectively shown in FIG. 8 and FIG. 9 and creates the edge extracted images 22a and 22b respectively shown in FIG. 10 and FIG. 11.

FIG. 8 is a view showing one example of the vertical-edge extracting filter of the identification unit 22. The vertical-edge extracting filter F1 shown in FIG. 8 is a 5x5 operator which filters the regions of 5x5 pixels simultaneously. This vertical-edge extracting filter F1 is most sensitive to the extraction of the vertical edges and not sensitive to the extraction of the horizontal edges.

On the other hand, FIG. 9 is a view showing one example of the horizontal-edge extracting filter of the identification unit 22. The horizontal-edge extracting filter F2 shown in FIG. 9 is most sensitive to the extraction of the horizontal edges and not sensitive to the extraction of the vertical edges.

FIG. 10 is a view showing the edges which the identification unit 22 extracts from the image 17 using the vertical-edge extracting filter F1. In the edge extracted image 22a shown in FIG. 10, the edges indicated by the solid line indicate the vertical edges extracted by the vertical-edge extracting filter F1 and the edges indicated by the dotted line indicate the edges other than the vertical edges extracted by the vertical-edge extracting filter F1. The horizontal edges which the vertical-edge extracting filter F1 cannot extract are not shown in the edge extracted image 22a.

On the other hand, FIG. 11 is a view showing the edges which the identification unit 22 extracts from the image 17 using the horizontal-edge extracting filter F2.

In the edge extracted image 22b shown in FIG. 11, the edges indicated by the solid line indicate the horizontal edges extracted by the horizontal-edge extracting filter F2 and the edges indicated by the dotted line indicate the edges other than the horizontal edges extracted by the horizontal-edge extracting filter F2. The vertical edges which the horizontal-edge extracting filter F2 cannot extract are not shown in the edge extracted image 22b.

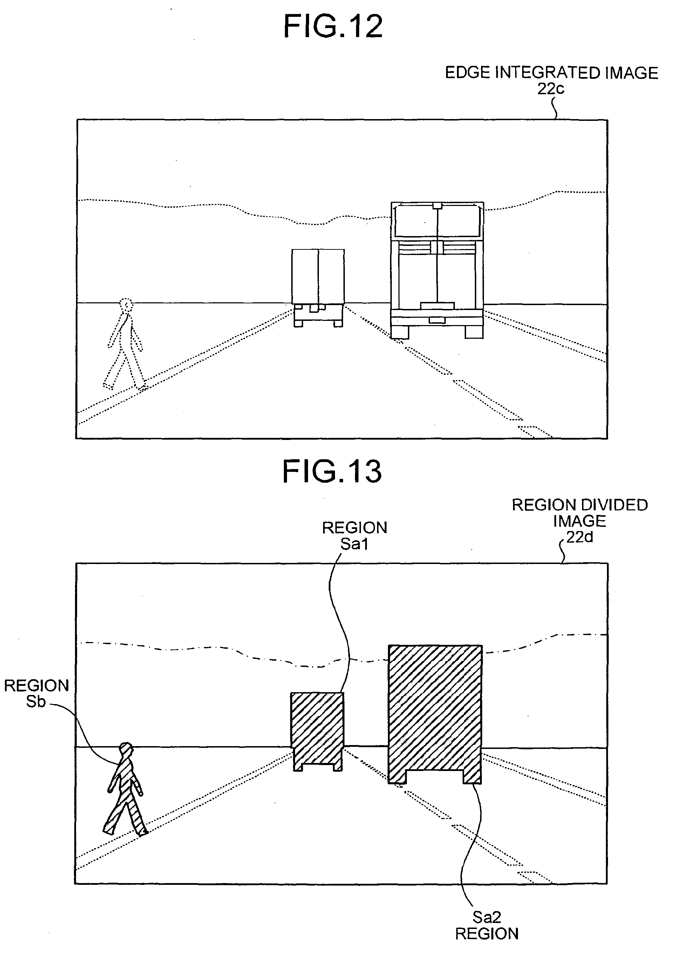

The identification unit 22 integrates the edge extracted image 22a that is the vertical information and the edge extracted image 22b that is the horizontal information and creates an edge integrated image 22c as shown in FIG. 12. Further, the identification unit 22 creates a region divided image 22d that is an image consisting of a region surrounded by a closed curve formed by the edges and the other region, as shown in FIG. 13, according to the edge integrated image 22c. In the region divided image 22d, the regions surrounded by the closed curve, Sa1, Sa2, and Sb are shown as the diagonally shaded portions.

In the object identification processing shown in Step S124, the identification unit 22 recognizes the regions surrounded by the closed curve as the regions corresponding to the predetermined objects, based on the region divided image and identifies the types of the objects corresponding to these regions. At this time, the identification unit 22 performs the template matching of sequentially collating the respective regions corresponding to the respective objects with templates, referring to a plurality of templates representing the respective typical patterns of the respective objects stored in the template information 52 and identifying each of the objects corresponding to each of the regions as the object represented by the template having the highest correlation or having a predetermined value of correlation factor or higher and creates the identification information having the corresponding region and type of the identified object.

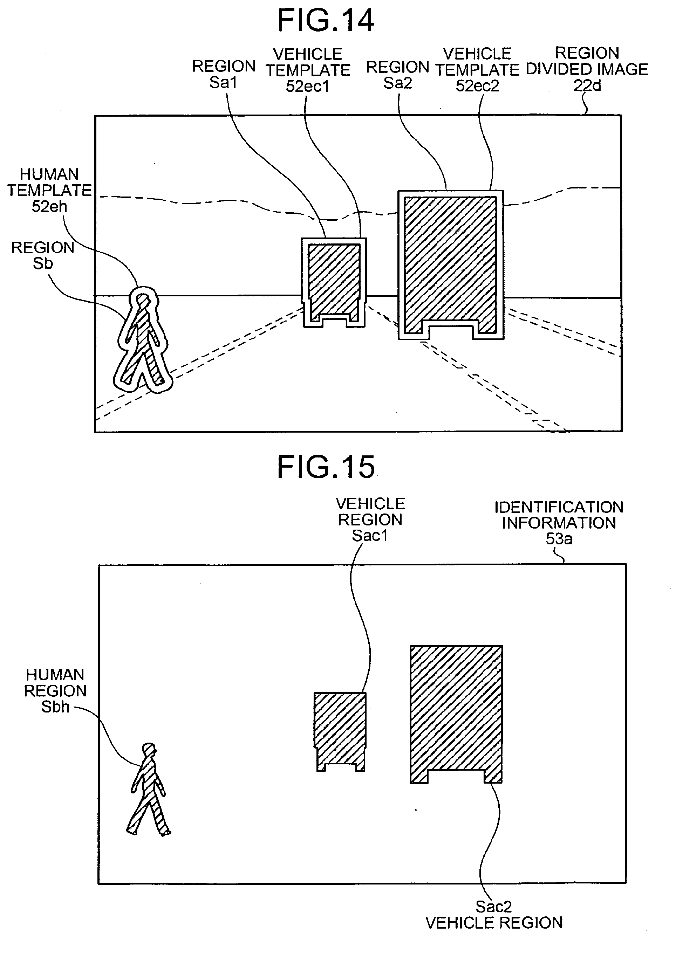

Specifically, the identification unit 22 sequentially superimposes the templates on the regions Sa1, Sa2, and Sb divided corresponding to the objects within the region divided image 22d, as shown in FIG. 14, and selects vehicle templates 52ec1 and 52ec2 and a human template 52eh as each template having the highest correlation to each region. As the result, the identification unit 22 identifies the objects corresponding to the regions Sa1 and Sa2 as a vehicle and the object corresponding to the region Sb as a human. The identification unit 22 creates the identification information 53a with the respective regions and types of the respective objects brought into correspondence, as shown in FIG. 15. The identification unit 22 may set the individual labels at the vehicle regions Sac1 and Sac2 and the human region Sbh created as the identification information and identify the respective regions according to these set labels.

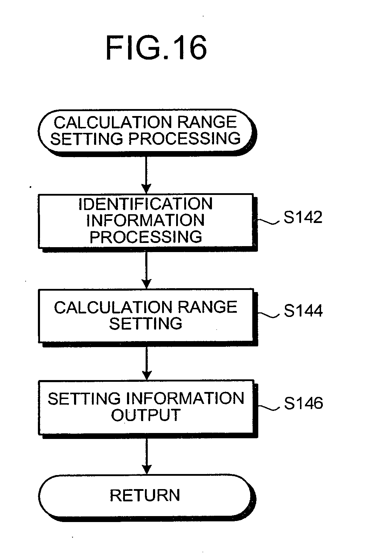

The calculation range setting processing of Step S105 shown in FIG. 2 will be described. FIG. 16 is a flow chart showing the procedure of the calculation range setting processing. As illustrated in FIG. 16, the calculation range setting unit 23 performs the identification information processing of adding predetermined margins to the respective regions corresponding to the respective objects (Step S142), referring to the identification information, performs the calculation range setting of setting the regions with the margins added as calculation ranges to be calculated by the distance calculation unit 24 (Step S144), outputs the information of the set calculation ranges (Step S146), and returns to Step S105.

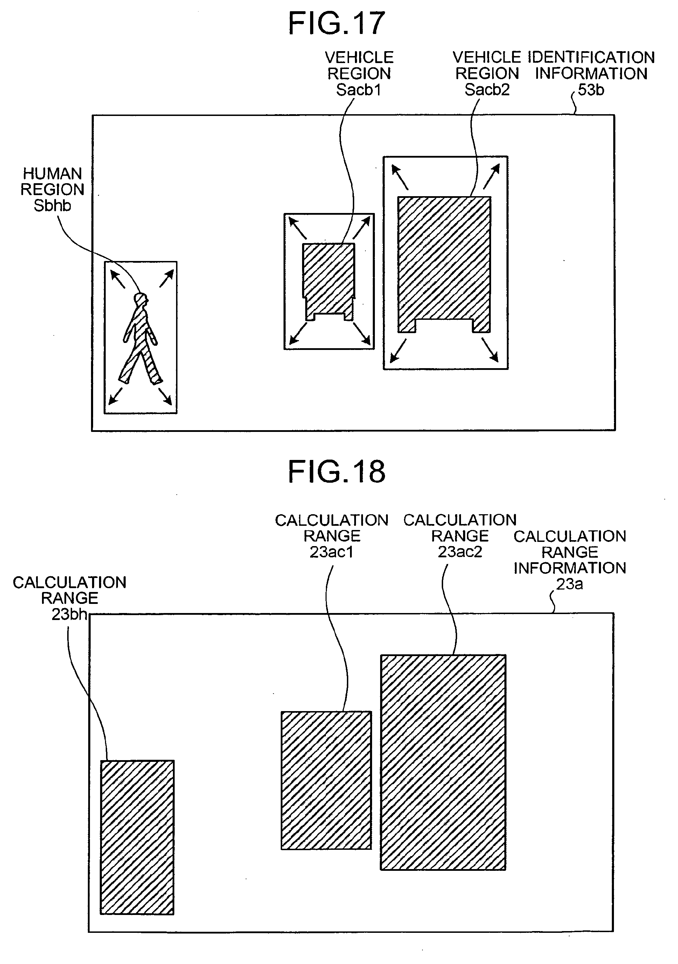

In the identification information processing shown in Step S142, the calculation range setting unit 23 creates the identification information 53b with the margins newly added to the vehicle regions Sac1 and Sac2 and the human region Sbh within the identification information 53a, according to the necessity, as new vehicle regions Sacb1, Sacb2, and the human region Sbhb, as illustrated in FIG. 17. The margin is to tolerate a fine error near the boundary of the divided region at a time of creating the region divided image 22d or to tolerate calibration of the region caused by a shift or movement of an object itself according to a time lag between at a pickup time and at a processing time. Further, the calculation range setting unit 23 creates the calculation range information 23a with the calculation ranges for distance calculation respectively set at the regions Sacb1, Sacb2, and Sbhb of the identification information 53b, as respective calculation ranges 23ac1, 23ac2, and 23bh, as illustrated in FIG. 18.

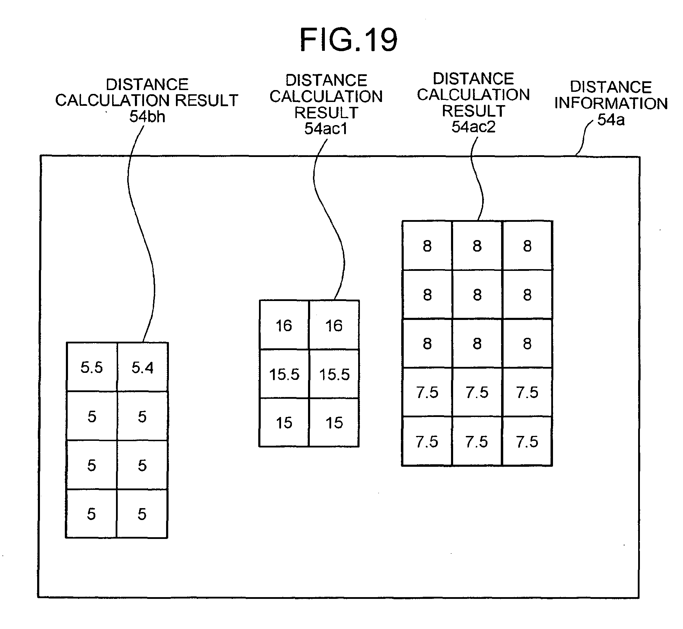

One example of the distance information created by the distance calculation unit 24 will be described, in the distance calculation processing in Step S107 shown in FIG. 2. FIG. 19 is a view showing one example of the distance information 54a created by the distance calculation unit 24 based on the image 17 shown in FIG. 7 corresponding to the calculation range information 23a shown in FIG. 18. In the distance information 54a, the distance calculation results 54ac1, 54ac2, and 54bh show the results of the distance calculations corresponding to the respective calculation ranges 23ac1, 23ac2, and 23bh. The respective distance calculations numerically show the results of the distance calculation unit 24 dividing the corresponding respective calculation ranges into small square regions, as illustrated in FIG. 19, and calculating each average distance to each corresponding object in every divided region. The numeric used in the distance calculation result is a predetermined unit of distance, for example, a unit of meter. The distance calculation results 54ac1, 54ac2, and 54bh show each distance to the vehicles C1 and C2 and the human H1 in the image 17. The small square regions may be divided depending on the relation between the distance calculation capacity and the throughput or the resolving power (resolution) to the object to be recognized.

Since the image processing apparatus 1 according to the first embodiment extracts a region corresponding to a predetermined object from the image information and calculates a distance only in the extracted region, as mentioned above, it is possible to reduce the load of the distance calculation processing and shorten the time required for the distance calculation compared with the conventional image processing apparatus which performs the distance calculation on all the image signals of the image information. As the result, the image processing apparatus 1 can shorten the time obtained from the pickup of the image to the output of the distance information and output the distance information at a high speed.

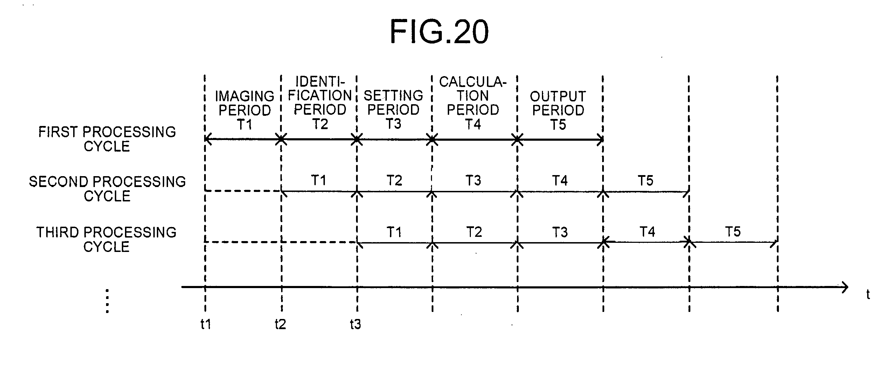

Although the sequential processing performed by the image processing apparatus 1 has been described according to the series of processing shown in FIG. 2, it is preferable that a plurality of processing may be actually performed in parallel through pipeline processing. One example of the pipeline processing is described in FIG. 20. FIG. 20 is a timing chart showing the timing of the series of processing shown in FIG. 2. The imaging period T1, the identifying period T2, the setting period T3, the calculation period T4, and the output period T5 shown in FIG. 20 respectively correspond to the times taken for the imaging processing, the identification processing, the calculation range setting processing, the distance calculation processing, and the distance information output process shown in FIG. 2. In the first processing cycle, it starts the imaging processing at the time t1, passing through a series of the processing from the imaging period T1 to the output period T5, hence to output the distance information. Though the next second processing cycle is generally started after the output of the distance information in the first processing cycle, the imaging processing is started at the time t2 before the output by the pipeline processing. In this case, the time t2 is the time of finishing the imaging processing of the first processing cycle and the imaging processing of the first processing cycle and the imaging processing of the second processing cycle are continuously performed. Similarly, the processing other than the imaging processing is started in the second processing cycle just after the same processing is finished in the first processing cycle. The respective processing is performed at the similar timing even in the third processing cycle and later, to repeat the series of the processing. As the result, when the distance information is repeatedly output, the output cycle can be shortened and the distance information can be output more frequently.

As a method of speeding up the calculation, the image processing apparatus 1 adopts various kinds of methods.

For example, there is a method of reducing the number of colors in the image information in order to speed up the calculation. In this method, the number of gradation as for each of RGB-three original colors is reduced and the number of data that is the number of bits concerning the gradation is reduced, hence to speed up the calculation.

Further, there is a method of reducing the number of the image signals in the image information in order to speed up the calculation. In this method, for example, image signals are extracted from the image information at predetermined intervals and the number of the image signals in use for the calculation is reduced, hence to speed up the calculation. This is effective in the case where it is not necessary to recognize an image highly finely.

As a means for reducing the number of the image signals in the image information, a reduction of the imaging region is effective. For example, when driving on an express highway, it is important to detect a vehicle ahead and an obstacle relatively far away from this vehicle and it is less necessary to detect a nearby object in many cases. In this case, the number of image information may be reduced by masking the peripheral portion of the imaging view at the stage of picking up an image or at the stage of processing the image, hence to speed up the calculation.

As a means for speeding up the repetition of the processing, the image processing apparatus 1 may be provided with two processing mechanisms each including the identification unit 22 and the calculation range setting unit 23 and the two mechanisms may perform the identification processing and the calculation range setting processing in parallel. In this case, the respective mechanisms may correspond to the right camera and the left camera, and based on the image information created by the corresponding cameras, the respective mechanisms may perform the identification processing and calculation range setting processing in parallel, hence to speed up the repetition of the processing.

Although the above-mentioned image processing apparatus 1 adopts the method of extracting edges from the image information to form regions separately and identifying the type of an object through template matching as a method of identifying a predetermined object, it is not limited to this method but various region dividing methods or pattern identification methods can be adopted.

For example, the Hough transform may be used as the region dividing method to extract the outline of an object while detecting a straight line or a predetermined curve from the image information. Further, a clustering method may be used based on the features such as concentration distribution, temperature gradation, and gradation of color, hence to divide regions.

Further, by using the fact that many vehicles are symmetrical in the outline when seen from rear side, a symmetrical region may be extracted from the image information and the region may be regarded as the region corresponding to a vehicle, as an identification method of an object.

Alternatively, the feature points may be extracted from a plurality of time series image information, the feature points corresponding to the different times are compared with each other, the feature points having the similar shift are grouped, a peripheral region of the group is judged as a region corresponding to a notable object, and the size of variation in the distribution of the grouped feature points is judged to identify a rigid body such as a vehicle or a non-rigid body such as a human.

Further, a region corresponding to a road including asphalt, soil, and gravel is schematically extracted from the image information according to the distribution of color or concentration, and when there appears a region having features different from those of the road region, the region may be judged as a region corresponding to an obstacle. The preprocessing such as the region dividing processing may be omitted and an object may be identified only through the template matching.

Second embodiment

A second embodiment of the invention will be described in the following. Although the first embodiment detects a distance to an object picked up by processing the image signal group supplied from the imaging unit 10, the second embodiment detects a distance to an object positioned within the imaging view by a radar.

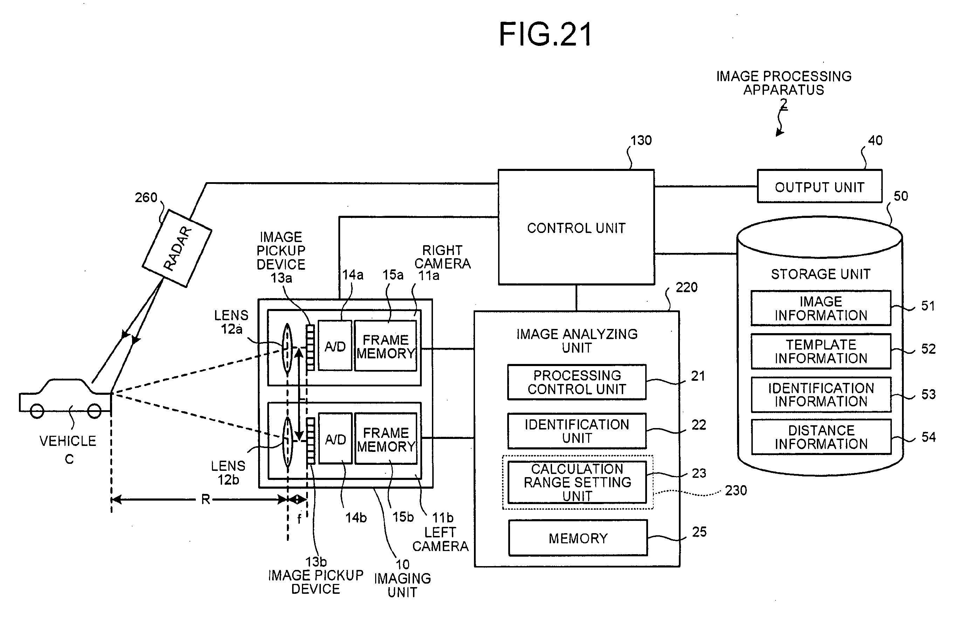

FIG. 21 is a block diagram showing the structure of the image processing apparatus according to the second embodiment of the invention. The image processing apparatus 2 shown in FIG. 21 further comprises a radar 260 in addition to the image processing apparatus 1 of the first embodiment. The image analyzing unit 220 further comprises a processing control unit 21, an identification unit 22, a calculation range setting unit 23 (a part of the processing region setting unit 230), and a memory 25. It further comprises a control unit 130 having a function of controlling the radar 260, instead of the control unit 30. The other components are the same as those of the first embodiment and the same reference numerals are attached to the same components.

The radar 260 transmits a predetermined wave and receives the reflected wave of this wave that is reflected on the surface of an object, to detect a distance to the object reflecting the wave transmitted from the radar 260 and the direction where the object is positioned, based on the transmitting state and the receiving state. The radar 260 detects the distance to the object reflecting the transmitted wave and the direction of the object, according to the transmission angle of the transmitted wave, the incident angle of the reflected wave, the receiving intensity of the reflected wave, the time from transmitting the wave to receiving the reflected wave, and a change in frequency in the received wave and the reflected wave. The radar 260 outputs the distance to the object within the imaging view of the imaging unit 10 together with the direction of the object, to the control unit 130. The radar 260 transmits laser light, infrared light, extremely high frequency, micro wave, and ultrasonic wave.

Since the image processing apparatus 2 of the second embodiment detects a distance by the radar 260, instead of calculating the distance by processing the image information from the imaging unit 10, the distance information can be obtained more quickly and more precisely.

The image processing apparatus 2 performs the following processing before matching the positional relation in the image signal group picked up by the imaging unit 10 with the positional relation in the detection range of the radar 260. For example, the image processing apparatus 2 performs the imaging processing by the imaging unit 10 and the detecting processing by the radar 260 on an object whose shape is known and obtains the respective positions of the known objects processed by the imaging unit 10 and the radar 260 respectively. Then, the image processing apparatus 2 obtains the positional relation between the objects processed by the imaging unit 10 and the radar 260 using the least squares method, hence to match the positional relation in the image signal group picked up by the imaging unit 10 with the positional relation in the detection range by the radar 260.

Even when the imaging original point of the imaging unit 10 is deviated from the detection original point of the radar 260 in the image processing apparatus 2, when a distance from the imaging point and the detection point to the image processing apparatus 2 is long enough, it can be assumed that the imaging original point and the detection original point substantially overlap with each other. Further, when the positional relation in the image signal group picked up by the imaging unit 10 is precisely matched with the positional relation in the detection range by the radar 260, it is possible to correct a deviation between the imaging original point and the detection original point through geometric conversion.

The image processing apparatus 2 positions the respective radar detection points of the radar 260 at predetermined intervals at each pixel line where the respective image signals of the image signal group picked up by the imaging unit 10 are positioned. Alternatively, when the respective radar detection points are not positioned in this way, it may obtain an interpolating point for the radar detection point on the same pixel line as the respective image signals, using a first interpolation, based on a plurality of radar detection points positioned near the respective image signals, hence to perform the detecting processing using this interpolating point.

Third embodiment

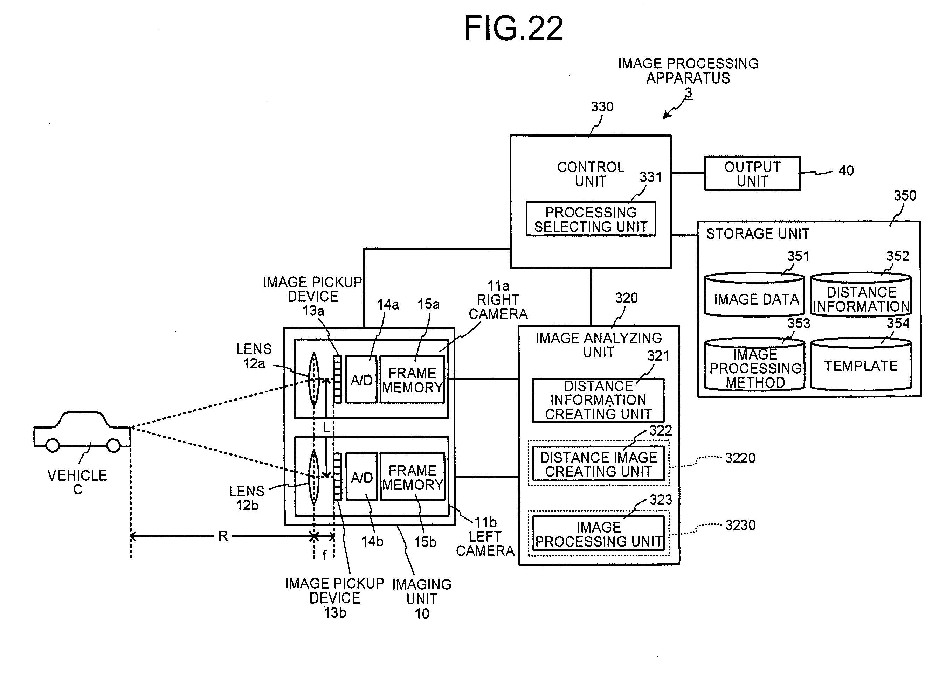

FIG. 22 is a block diagram showing the structure of an image processing apparatus according to a third embodiment of the invention. The image processing apparatus 3 shown in FIG. 22 comprises an imaging unit 10 which picks up a predetermined view, an image analyzing unit 320 which analyzes the images created by the imaging unit 10, a control unit 330 which controls an operation of the image processing apparatus 3, an output unit 40 which outputs the information such as image and character on a display, and a storage unit 350 which stores various data. In the image processing apparatus 3, the same reference numerals are attached to the same components as those of the image processing apparatus 1 in the first embodiment.

The image-analyzing unit 320 comprises a distance information creating unit 321 which creates distance information including a distance from the imaging unit 10 to all or one of the component points (pixels) of an image included in the view picked up by the imaging unit 10, a distance image creating unit 322 which creates a three-dimensional distance image, using the distance information created by the distance information creating unit 321 and the image data picked up by the imaging unit 10, and an image processing unit 323 which performs the image processing using the distance information and the distance image. Here, the distance image creating unit 322 constitutes a part of a processing region setting unit 3220 which sets a region to be processed in the image created by the imaging unit 10. The image processing unit 323 constitutes a part of a processing calculating unit 3230 which performs a predetermined processing calculation on the processing region set by the processing region setting unit 3220. The image analyzing unit 320 includes a function of calculating various parameters (calibration function) necessary for performing various kinds of processing described later and a function of performing the correction processing (rectification) depending on the necessity when creating an image.

The control unit 330 includes a processing selecting unit 331 which selects an image processing method to be processed by the image processing unit 323 as for the distance information of all or one of the component points of an image, from a plurality of the image processing methods.

The storage unit 350 stores the image data 351 picked up by the imaging unit 10, the distance information 352 of all or one of the component points of the image data 351, the image processing method 353 that is to be selected by the processing selecting unit 331, and the template 354 which represents patterns of various objects (vehicle, human, road, white line, sign, and the like) for use in recognizing an object in an image, in a unit of the pixel point.

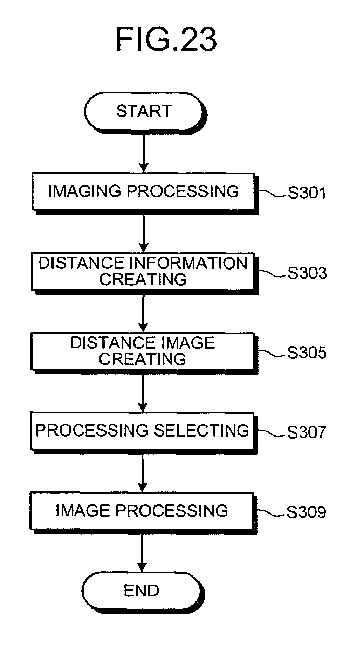

The image processing method performed by the image processing apparatus 3 having the above-mentioned structure will be described with reference to the flow chart shown in FIG. 23. The imaging unit 10 performs the imaging processing of picking up a predetermined view and creating an image (Step S301).

After the imaging processing in Step S301, the distance information creating unit 321 within the image analyzing unit 320 calculates a distance to all or one of the component points of the image and creates distance information including a distance to all or one of the calculated component points (Step S303). More specifically, the distance information creating unit 321 calculates the coordinate values of all or one of the pixel points within each view picked up by the right and left camera coordinate systems. The distance information creating unit 321 calculates the distance R from the front surface of a vehicle to the picked up point by using the coordinate values (x, y, z) of the calculated pixel point. The position of the front surface of a vehicle in the camera coordinate system has to be measured in advance. Then, the distance information creating unit 321 brings each coordinate values (x, y, z) and each distance R of all or one of the calculated pixel points of the image into correspondence with the image hence to create the distance information and stores it into the storage unit 350.

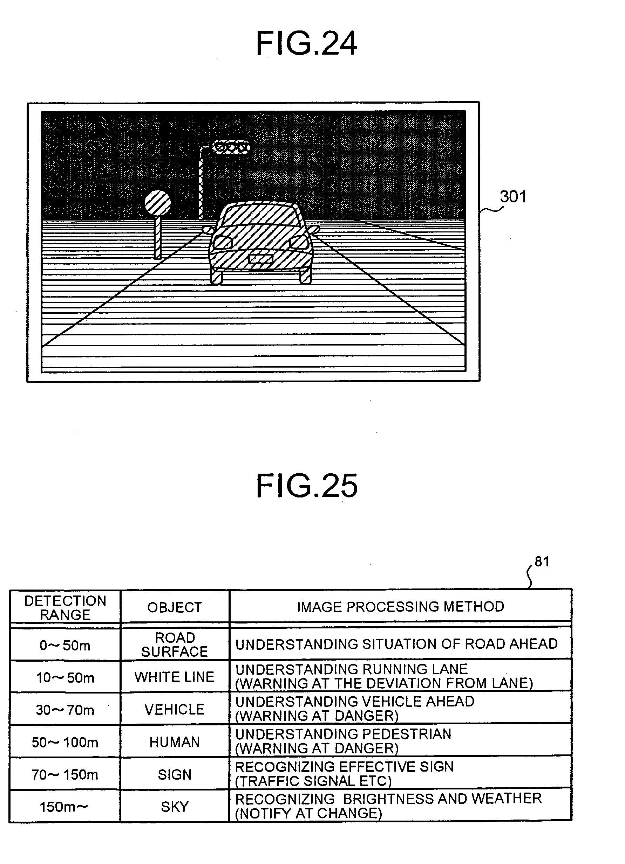

In the subsequent Step S305, the distance image creating unit 322 creates a distance image by superimposing the distance information created in Step S303 on the image created in Step S301. FIG. 24 is a view showing a display output example of the distance image in the output unit 40. The distance image 301 shown in FIG. 24 represents a distance from the imaging unit 10 according to the degree of gradation and it is displayed more densely according as the distance is longer.

Then, the processing selecting unit 331 within the control unit 30 selects an image processing method to be performed by the image processing unit 323 according to the distance information obtained in Step S303, as for each point within the image, from the image processing methods 353 stored in the storage unit 350 (Step S307). The image processing unit 323 performs the image processing (Step S309) according to the image processing method selected by the processing selecting unit 331 in Step S307. At this time, the image processing unit 323 reads the image processing method selected by the processing selecting unit 331 from the storage unit 350 and performs the image processing according to the read image processing method.

FIG. 25 is a view showing one example of the image processing method selected by the processing selecting unit 331 according to the distance information. A correspondence table 81 shown in FIG. 25 shows a correspondence between each object to be recognized according to the distance of all or one of the component points of the image calculated in Step S303 and each image processing method actually adopted when recognizing each predetermined object at each distance band. With reference to the correspondence table 81, the image processing methods adopted by the image processing unit 323 corresponding to the respective distance information will be described specifically.

At first, as the result of the distance information creating processing in Step S303, a road surface detection is performed as for a set of the pixel points positioned in the range of 0 to 50 m distance from the imaging unit 10 (hereinafter, expressed as "distance range 0 to 50 m"). In this road surface detection, a set of the pixel points in the distance range 0 to 50 m is handled as one closed region and it is checked whether the closed region forms the image corresponding to the road surface. Specifically, by comparing the patterns concerning the road surface previously stored in the template 354 of the storage unit 350 with the patterns formed by the pixel points in the distance range 0 to 50 m, of the pixel points within the distance image 301, the correlation of the both is checked (template matching). As the result of the template matching, when detecting a pattern satisfying a predetermined correlation with the pattern of the road surface, in the distance image 301, the situation of the road surface is recognized from the pattern. The situation of the road surface means the curving degree of a road (straight or curve) and the presence of frost on a road. Even in the image processing methods for the other detection ranges in FIG. 25, the same template matching is performed, hence to detect and recognize an object depending on each detection range.

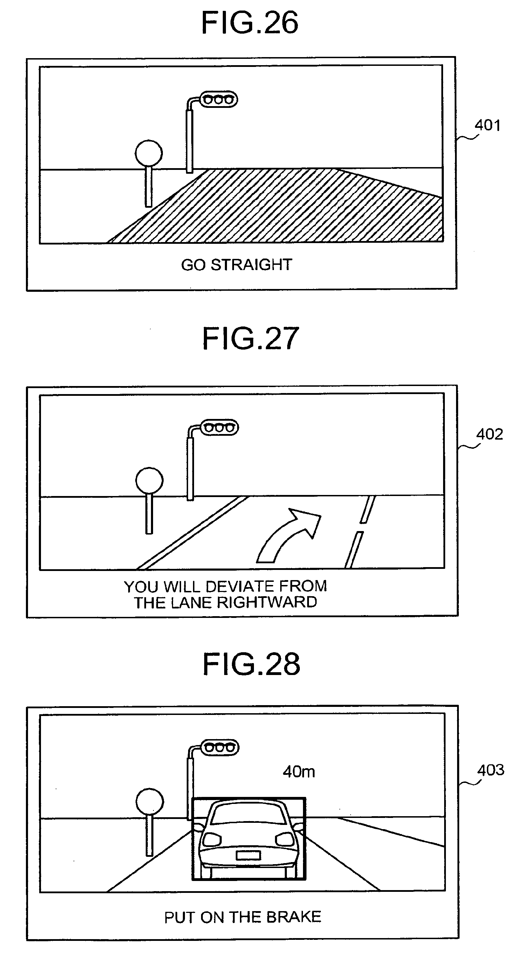

FIG. 26 is a view showing one example of the image processing method performed by the image processing unit 323 when detecting a road at the distance range 0 to 50 m. The display image 401 shows that the road this vehicle is running on is straight, as the result of detecting the road. When the detected road is recognized as a curved road, it may display a message "Turn the steering wheel".

As for the image component points positioned within the distance range 10 to 50 m, a detection of a white line is performed and when a white line is detected, it has to figure out the running lane of this vehicle. In this case, when this vehicle is about to deviate from the running late, it notifies this to the driver. FIG. 27 is a view showing a display example in the output unit 40 when it detects that this vehicle is about to run in a direction deviated from the running lane as the result of the white line detection in the distance range 10 to 50 m. The display image 402 shown in FIG. 27 shows a display example in the output unit 40 when it judges that the direction or the pattern of the detected white line is not normal in light of the proceeding direction of this vehicle, displaying a warning message "You will deviate from the lane rightward.", as the judgment result in the image processing unit 323. In accordance with the display of the warning message, voice of the same contents may be output or a warning sound may be generated. Although the white line has been taken, by way of example, as the running lane dividing line, the running lane dividing line of other color (for example, yellow line) than white may be detected.

As for the image component points within the distance range of 30 to 70 m, a detection of a vehicle ahead is performed and when a vehicle ahead is detected, a warning is issued and the like. FIG. 28 is a view showing a display example of the output unit 40 when a vehicle is detected at 40 m ahead from the imaging unit 10. In the display image 403 shown in FIG. 28, a window indicating the closed region for the vehicle that is an object is provided on the screen, hence to make it easy for a person on the vehicle to recognize the object, and at the same time, a warning "Put on the brake" is output. Also in this case and in the other distance ranges as follows, a sound or a sound message can be output together with a display of a message, similarly to the processing as mentioned above.

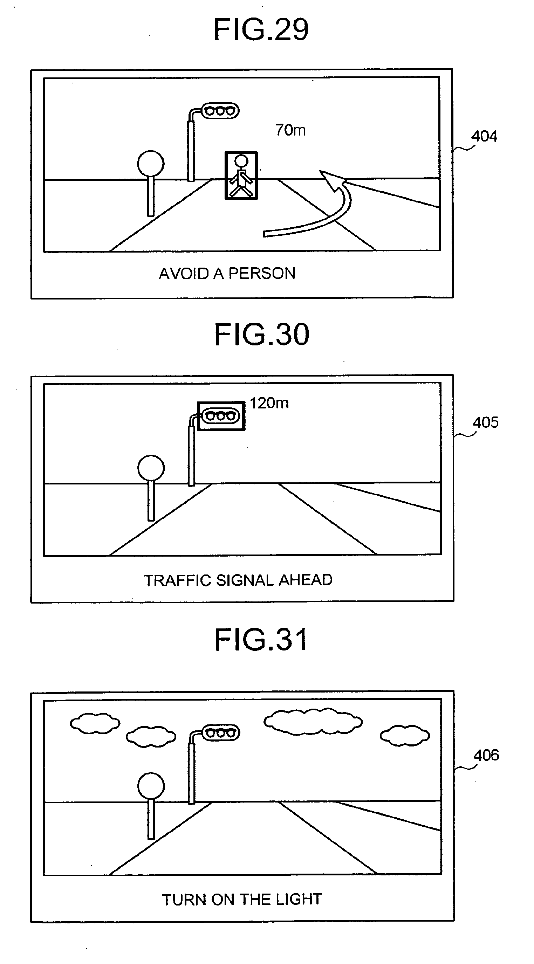

As for the image component points within the distance range 50 to 100 m, a detection of a human (or an obstacle) is performed and when a human is detected, the warning processing is performed. FIG. 29 shows the display image 404 when it detects a human crossing the road at a distance 70 m ahead from the imaging unit 10 and displays a message "You have to avoid a person".

As for the image components within the distance range 70 to 150 m, a detection of a road sign such as traffic signal is performed and when it is detected, the type of the sign is at least recognized. The display image 405 shown in FIG. 30 shows the case where a signal is detected at a distance 120 m ahead from the imaging unit 10, a window for calling the driver's attention to the signal is provided and a message "Traffic signal ahead" is displayed. At a time of the detection of a traffic signal, the color of the signal may be detected simultaneously and when the signal is red, for example, a message to the effect of directing the driver to be ready for brake may be output.

At last, as for the image component points at a distance 150 m and more far from the imaging unit 10, a detection of sky is performed and the color, brightness, and the volume of clouds as for the sky are recognized. The display image 406 shown in FIG. 31 shows the case where as the result of detecting the sky in the distance range of 150 m and more, it judges that it becomes cloudy and dark in the direction ahead and displays a message to the effect of directing the driver to turn on a light of the vehicle. As a situation judgment of the sky, raindrop may be detected and a message of directing the driver to operate a wiper may be displayed.

The correspondence between the detection ranges and the image processing methods shown in the above correspondence table 81 is just an example. For example, although the correspondence table 81 shows the case where one image processing is performed in one detection range, a plurality of image processing may be set in one detection range. For example, in the detection range 0 to 50 m, the road surface detection and the human detection may be performed and the image processing may be performed according to the detected object.

Although the above description has been made in the case where one image processing is performed within one image, another image processing depending on the detection range may be performed on the different regions within the display image at the same time.

Further, a plurality of combinations of the detection ranges and the image processing methods other than those of the correspondence table 81 may be stored in the image processing method 353 of the storage unit 350, hence to select the optimum combination depending on various conditions including the speed of this vehicle obtained by calculating shift of arbitrary pixel points when the distance information is aligned in time series, the situation of the running region (for example, weather, or distinction of day/night) recognized by detecting a road surface and the sky, and a distance from a start of a brake to a stop of a vehicle (braking distance). At this time, a selection method changing means additionally provided in the image processing apparatus 3 changes the selecting method of the image processing method in the processing selecting unit 331.

As one example of this, the case of changing the combination of the detection range and the image processing method depending on the speed of this vehicle will be described. In this case, a plurality of detection ranges with upper and lower limits different at a constant rate are stored in the storage unit 350. For example, it is assumed that the above correspondence table 81 is used in the case of a drive at a medium speed. When the vehicle runs at a higher speed, the image processing method is changed to a combination of the detection ranges with greater upper and lower limits (for example, when the vehicle runs at a higher speed than at the time of using the correspondence table 81, the upper limit for the road detection is made larger than 50 m). While, when the vehicle runs at a lower speed, it is changed to a combination of the detection ranges with smaller upper and lower limits. Thus, the optimum image processing depending on the running speed of a vehicle is possible.

According to the third embodiment of the invention as mentioned above, it is possible to select the image processing method according to a distance to all or one of the component points of an image, by using the distance information and the distance image of the above component points of the image created based on the picked up image and process various information included in the picked up image in a multiple way.

Fourth embodiment

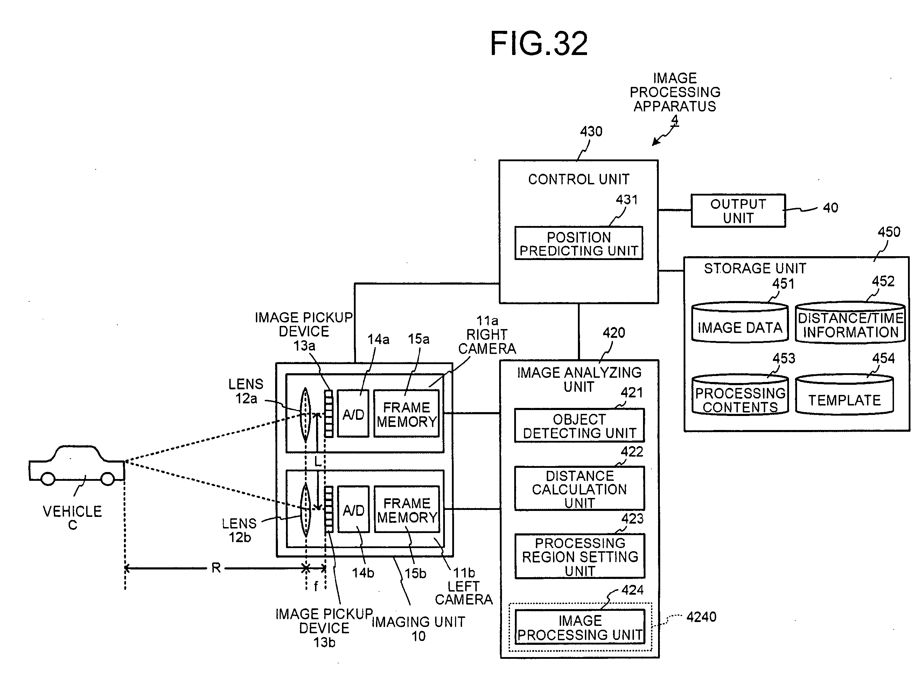

FIG. 32 is a block diagram showing the structure of an image processing apparatus according to a fourth embodiment of the invention. The image processing apparatus 4 shown in FIG. 32 comprises an imaging unit 10 which picks up a predetermined view, an image analyzing unit 420 which analyzes the image created by the imaging unit 10, a control unit 430 which controls the operation control of the image processing apparatus 4, an output unit 40 which displays the information such as an image and a character, and a storage unit 450 which stores various data. In the image processing apparatus 4, the same reference numerals are attached to the same components as those of the image processing apparatus 1 of the first embodiment.

The image analyzing unit 420 includes an object detecting unit 421 which detects a predetermined object from the image picked up by the imaging unit 10, a distance calculating unit 422 which calculates a distance from the imaging unit 10 to the object included in the image view picked up by the imaging unit 10, a processing region setting unit 423 which sets a processing region targeted for the image processing in the picked up image, and an image processing unit 424 which performs predetermined image processing on the processing region set by the processing region setting unit 423. Here, the image processing unit 424 constitutes a part of a processing calculating unit 4240 which performs a predetermined calculation on the processing region set by the processing region setting unit 423.

The control unit 430 has a position predicting unit 431 which predicts the future position of the object detected by the object detecting unit 421.

The storage unit 450 stores the image data 451 picked up by the imaging unit 10, distance/time information 452 including the distance information to the object within the view of the image data 451 and the time information concerning the image data 451, processing contents 453 that are specific methods of the image processing in the image processing unit 424, and templates 454 which represent shape patterns of various objects (vehicle, human, road surface, white line, sign, and the like) used for object recognition in the image in a unit of pixel points.

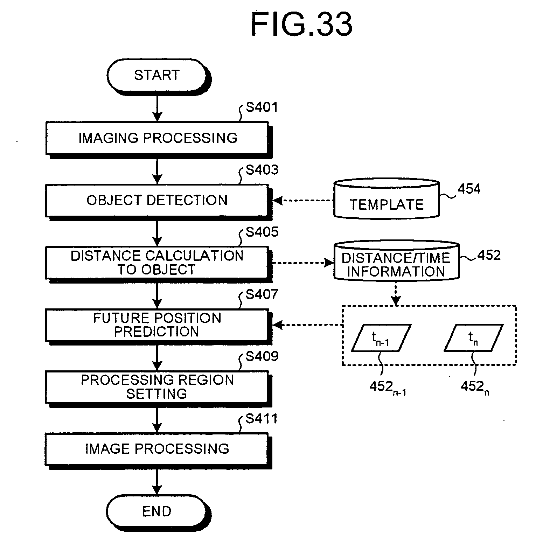

The image processing method performed by the image processing apparatus 4 having the above structure will be described in detail, referring to the flow chart shown in FIG. 33. At first, the imaging unit 10 performs the imaging processing of picking up a predetermined view to create an image (Step S401). The digital signals temporarily stored in the frame memories 15a and 15b are transmitted to the image analyzing unit 420 after an elapse of predetermined time and at the same time, the time information concerning the picked up image is also transmitted to the image analyzing unit 420.

Next, the object detecting unit 421 detects an object targeted for the image processing (Step S403) by using the image created in Step S401. When detecting an object, it reads out a shape pattern for this object from shape patterns of various objects (vehicle, human, road surface, white line, sign, traffic signal, and the like) stored in the templates 454 of the storage unit 450 and checks a correlation of the both by comparing the pattern of the object of the image with the shape pattern (template matching). In the following description, a vehicle C is used as a target object for the sake of convenience but this is only an example

As the result of the template matching in Step S403, when a pattern similar to the vehicle C, the target object, is detected, the distance calculating unit 422 calculates a distance to the vehicle C (Step S405). The distance calculating unit 422 calculates the coordinate values of all or one point forming the vehicle C within the view imaged by the right and left camera coordinate systems. Then, the distance calculating unit 422 calculates a distance R from the front surface of the vehicle to the picked up point by using the calculated coordinate values (x, y, z) of the pixel point. The position of the front surface of the vehicle in each of the camera coordinate systems is measured in advance. Then, by averaging the distance to each component point, a distance to the vehicle C is obtained, and stored into the storage unit 450.

The distance calculation capacity of the distance calculating unit 422 is improved according as the calculation time increases. Therefore, for example, when the distance calculating unit 422 performs the processing improved in the measurement accuracy through repetition, it stops the distance calculation at an early stage of the repetition when the distance to the target object is short, while it repeats the distance calculation processing until a predetermined accuracy is obtained when the distance is long.

Here, the distance image may be created (refer to FIG. 24) by superimposing the information such as the distance created by the distance calculating unit 422 on the whole view forming the image data 451 created by the imaging unit 10.

Next to Step S405, the position predicting unit 431 predicts the position (future position) of the vehicle C at the time $t_{n+1}(=t_n+\Delta t)$, after the predetermined elapse $\Delta t$ from the time $t_n$ (Step S407), by using the distance/time information $452_n$ (time $t_n$: where n is positive integer) of the vehicle C and the distance/time information $452_{n-1}$ of the vehicle C at the time $t_{n-1}=t_n-\Delta t$, prior to the time $t_n$ of the distance/time information $452_n$ by the predetermined time $\Delta t$.

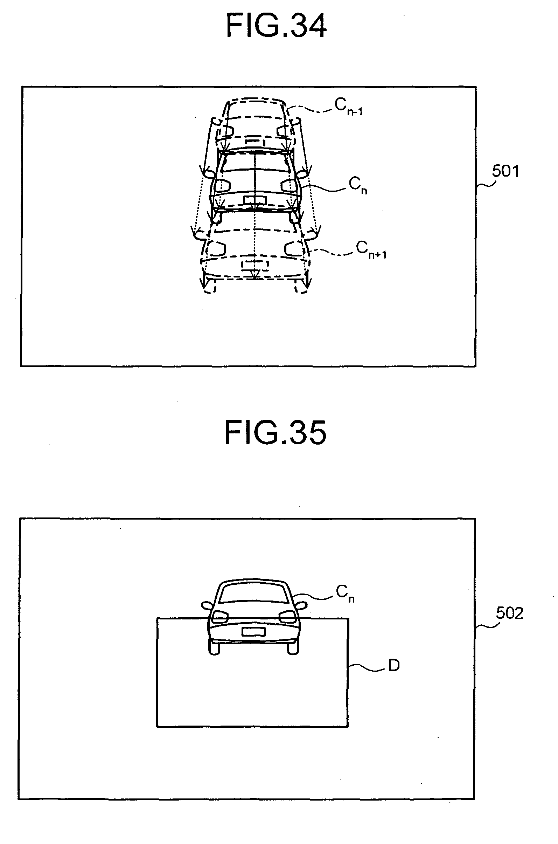

FIG. 34 is a view visually showing the result of the prediction processing in Step S407. The display image 501 shown in FIG. 34 illustrates an image $C_{n-1}$, $C_n$, and $C_{n+1}$ of the vehicle C at the three different times $t_{n-1}$, $t_n$, and $t_{n+1}$ in an overlapping way. Of the images, the image $C_{n-1}$ and the image $C_n$ are displayed using the actually picked up image data 451. On the contrary, the image $C_{n+1}$ that is the predicted position of the vehicle C in the future will be created as follows. At first, a vector (movement vector) is created by connecting the corresponding points in the image $C_{n-1}$ and the image $C_n$. Then, each vector is extended so that the length is double (in FIG. 34, each extended line is displayed by the dotted line). The image $C_{n+1}$ is created by connecting the end points of these extended vectors in order to form the outline of the vehicle. In order to form the outline of the vehicle, proper interpolation is performed between the end points of the adjacent vectors. Although FIG. 34 shows only the movement vectors of the typical points of the vehicle, a three-dimensional optical flow may be formed by obtaining all the movement vectors for every pixel point forming the vehicle.

In the above mentioned Step S407, although an image is created by using two distance/time information to predict the future position of the object, this prediction processing corresponds to calculation of the relative speed assuming that the relative speed of the vehicle C to this vehicle is constant. In this sense, the display image 501 shows the case where the vehicle C and this vehicle are proceeding in the same direction and the speed of the vehicle C on the road is slower than that of this vehicle on the road.

In the following Step S409, the processing region setting unit 423 sets the processing region for the image processing performed by using the image $C_{n+1}$ corresponding to the predicted future position of the vehicle C. FIG. 35 is a view showing a setting example of the processing region set in Step S409. In the display image 502 of FIG. 35, the processing region D includes the predicted future position (image $C_{n+1}$) of the vehicle C obtained in Step S407. Though the prediction processing of the future position is performed in Step S407 on the assumption that the relative speed is constant, the actual movements of the vehicle C and this vehicle will not be always as predicted. Therefore, the processing region D is set to include a predicted future position and a certain range of error from the predicted future position. The boundary of the processing region D doesn't have to be clearly indicated on the screen.

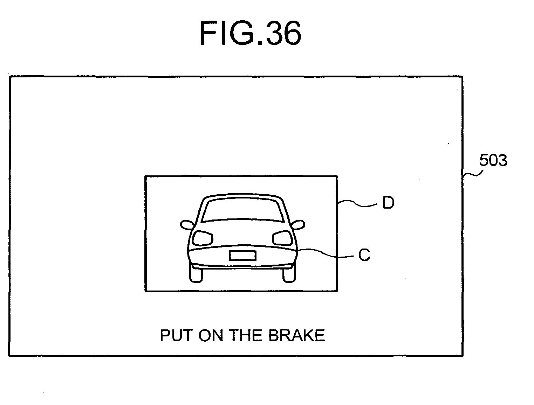

After Step S409, the predetermined image processing is performed on the processing region D (Step S411). FIG. 36 is a view showing one example of the image processing. The display image 503 in FIG. 36 shows a message "Put on the brake" when judging that the vehicle C is approaching this vehicle because of detecting the vehicle C in the processing region D. According to the display of this message, a warning sound or a warning message may be output from a speaker of the output unit 40.

As another image processing, for example, when the vehicle C is deviated from the processing region including the position predicted in Step S407, a message corresponding to the deviated contents may be displayed on the screen of the output unit 40 or a warning sound or a warning message may be output.

The image processing method may be changed depending on a distance from this vehicle to the processing region or depending on the running situation of this vehicle (speed, acceleration, and steering angle at steering). In order to make such changes, the processing changing unit provided in the control unit 430 changes the image processing method, referring to the processing contents 453 stored in the storage unit 450.

According to the fourth embodiment of the invention, it is possible to calculate a distance to the detected object from the imaging position, predict the relative position of the object to this vehicle after an elapse of predetermined time by using the distances to the objects included in the images picked up at least at the two different times, of a plurality of the images including objects, set the processing region for the image processing based on this prediction result, and perform the predetermined image processing on this set processing region, thereby processing various information included in the picked up image in a multiple way.

According to the fourth embodiment, it is possible to predict the future position of a vehicle that is an object by using the three-dimension movement vector and set the processing region for the image processing based on the prediction result, to narrow down the processing region for performing a predetermined image processing, thereby realizing rapid and effective image processing.

Although the future position of the object is predicted by using the distance to the object at the two different times in the fourth embodiment, it is possible to calculate a second difference of each point and calculate the relative acceleration of the object toward this vehicle by further using the distance to the object at the time different from the above two, thereby accurately predicting the future position of the object.

By using the GPS (Global Positioning System) and the current position of this vehicle or the speed of this vehicle, it is possible to correct the distance/time information referring to the three-dimensional map information stored by the GPS and discriminate a moving object easily. As the result, the future position can be predicted more accurately, thereby improving the reliability of the image processing apparatus. In this case, the storage unit 450 has to include a function as a three-dimensional map information storage unit which stores the three-dimensional map information.

The image processing apparatus of the fourth embodiment may be provided with a processing changing means for changing the method for image processing as for the processing region. With this processing changing means, it is possible to change the processing contents of each processing region, for example, according to the weather or according to the distinction of day/night known from the detection result of the sky. The processing region may be changed by the external input.

Instead of the object detection through template matching, an object may be detected by obtaining the segments of the object based on the distance/time information in the fourth embodiment, or it may be detected by using the region dividing method through the texture or edge extraction or by the statistical pattern recognition method based on the cluster analysis.

Fifth embodiment

A fifth embodiment of the invention is characterized by predicting the future position of an object detected within the picked up image, forming a three-dimensional space model by using the prediction result, setting a processing region by projecting the formed three-dimensional space model on the picked up image, and performing predetermined image processing on the processing region.

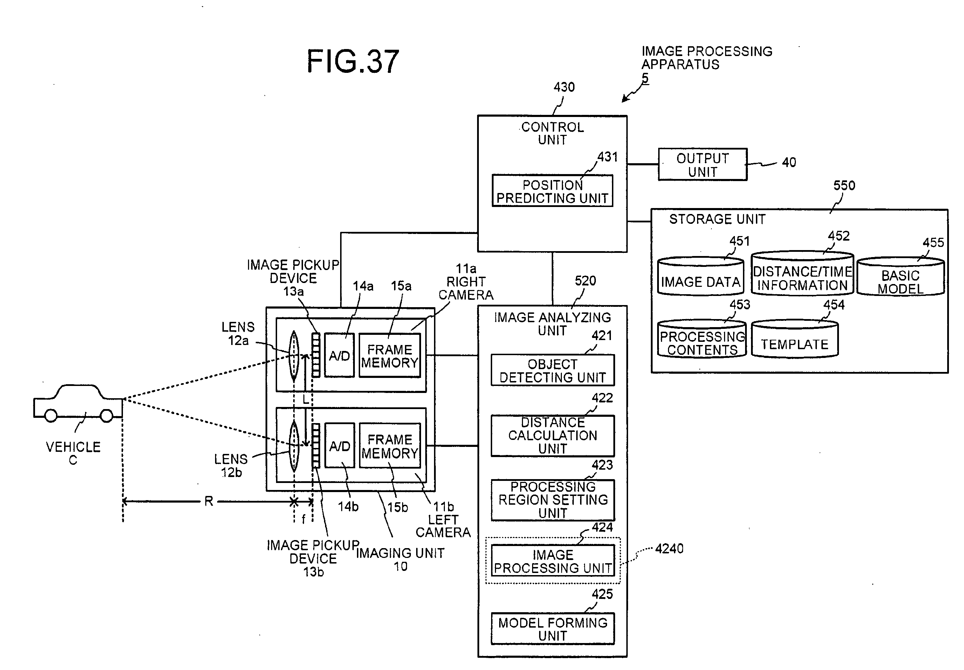

FIG. 37 is a block diagram showing the structure of an image processing apparatus according to the fifth embodiment of the invention. The image processing apparatus 5 shown in FIG. 37 has the same structure as that of the image processing apparatus 4 according to the fourth embodiment. Specifically, the image processing apparatus 5 comprises the imaging unit 10, the image analyzing unit 520, the control unit 430, the output unit 40, and the storage unit 550. Therefore, the same reference numerals are attached to the portions having the same functions as those of the image processing apparatus 4.

The image analyzing unit 520 includes a model forming unit 425 which forms a three-dimensional space model projected on the image, in addition to the object detecting unit 421, the distance calculating unit 422, the processing region setting unit 423, and the image processing unit 424 (a part of the processing calculating unit 4240). The storage unit 550 stores basic models 455 that are the basic patterns when forming a three-dimensional space model to be projected on the image, in addition to the image data 451, the distance/time information 452, the processing contents 453, and the templates 454.

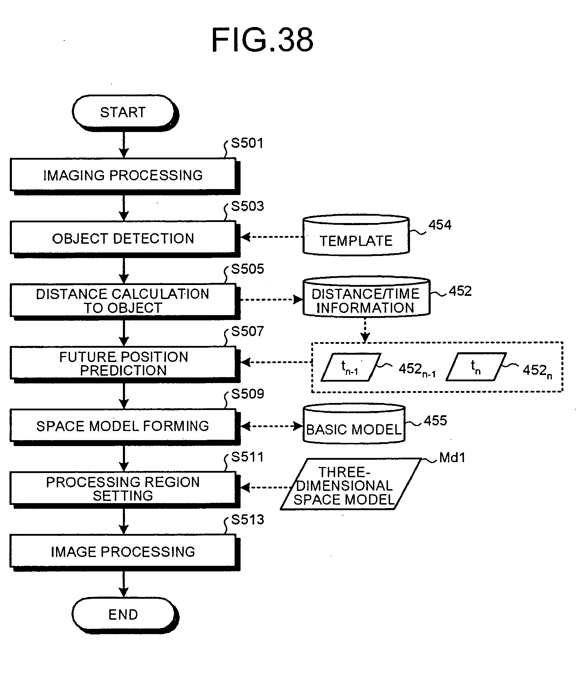

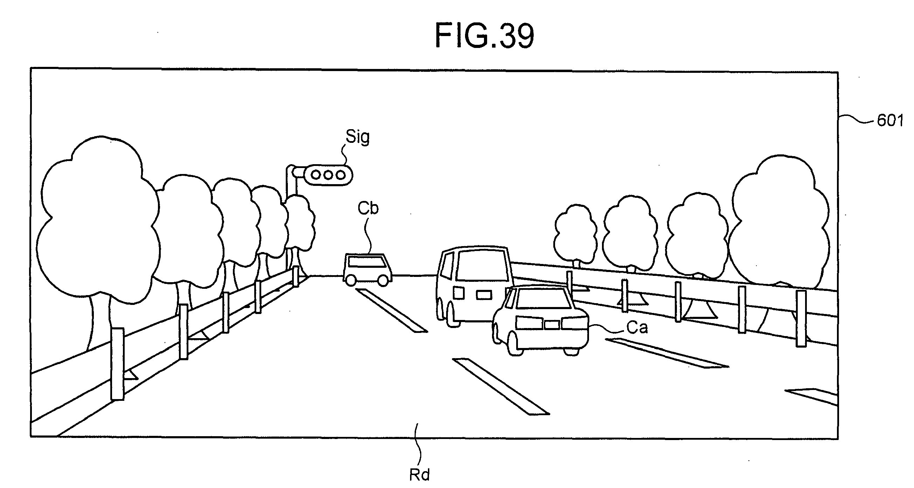

The image processing method performed by the image processing apparatus 5 having the above structure will be described with reference to the flow chart shown in FIG. 38. At first, the imaging unit 10 performs the imaging processing of picking up a predetermined view and creating an image (Step S501). Then, the object detecting unit 421 detects an object targeted for the image processing through the template matching (Step S503). When detecting the object in Step S503, the distance calculating unit 422 performs the distance calculation processing toward the object (Step S505). FIG. 39 is a view showing a display example of the image obtained as the result of performing the above Step S501 to S505. The image 601 in FIG. 39 shows the case where a vehicle Ca and the like are running ahead in the lane adjacent to the lane of this vehicle and an intersection is approaching ahead. In this intersection, a vehicle Cb is running in the direction orthogonal to the proceeding direction of this vehicle and there is a traffic signal Sig.

The processing in Step S501, S503, and S505 is the same as that in Step S401, S403, and S405 of the image processing method according to the first embodiment of the invention and the details are as mentioned in the fourth embodiment.

Next to Step S505, the position predicting unit 431 predicts the position (future position) of the object at the time $t_{n+1} (= t_n + \Delta t)$ at elapse of a predetermined time $\Delta t$ from the time $t_n$ (Step S507) by using the distance/time information $452_n$ (time $t_n$: n is positive integer) of the object obtained in Step S505 and the distance/time information $452_{n-1}$ of the object at the time $t_{n-1} = t_n - \Delta t$, prior to the time $t_n$ in the distance/time information $452_n$ by the predetermined time $\Delta t$. For example, in the case of the image 601, it may predict the future position of the vehicle Ca running in the adjacent lane or the future position of the vehicle Cb running near the intersection, or it may predict the future position of the road Rd or the traffic signal Sig as the object.

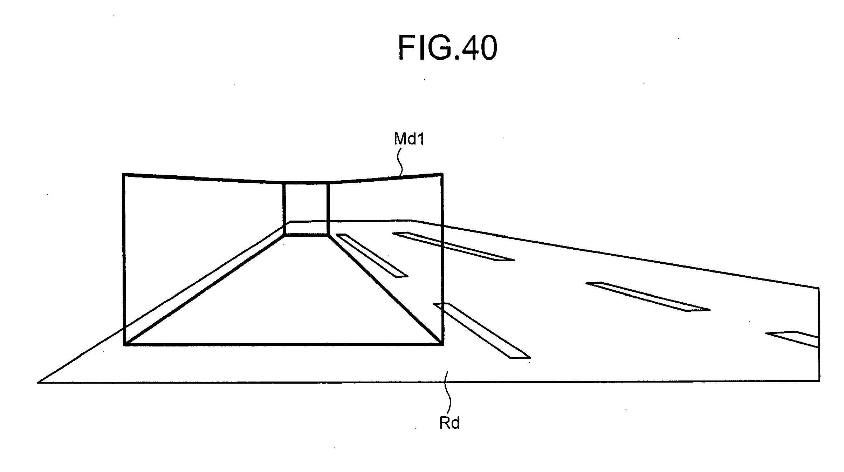

The model forming unit 425 forms a three-dimensional space model about the object according to the information of the predicted future position of the object (Step S509). FIG. 40 is an explanatory view showing one formation example of the three-dimensional space model. The three-dimensional space model Md1 in FIG. 40 shows the region where this vehicle can run within a predetermined time (the region where this vehicle can run). In this case, the object to be detected is the road Rd and the model forming unit 425 forms the three-dimensional space model Md1 shown in FIG. 40, by using the basic models 455 stored in the storage unit 550 in addition to the prediction result of the future position of the road Rd.

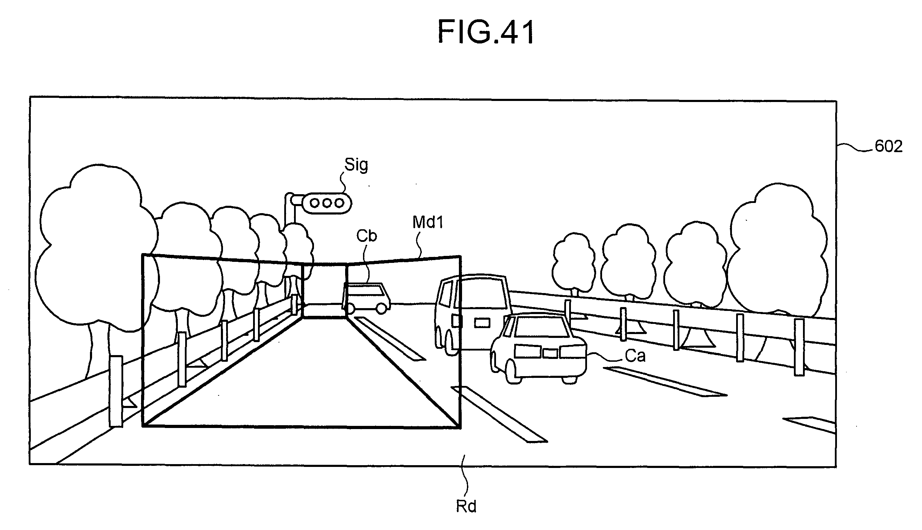

Next, the processing region setting unit 423 sets the processing region (Step S511) by projecting the three-dimensional space model Md1 formed in Step S509 on the image picked up by the imaging unit 10. The display image 602 in FIG. 41 shows a display example in the case where the three-dimensional space model Md1 (the region where this vehicle can run) is projected on the image picked up by the imaging unit 10.

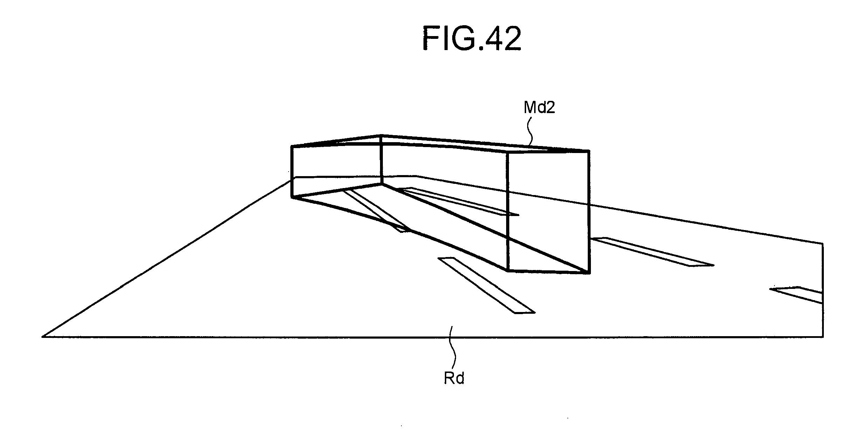

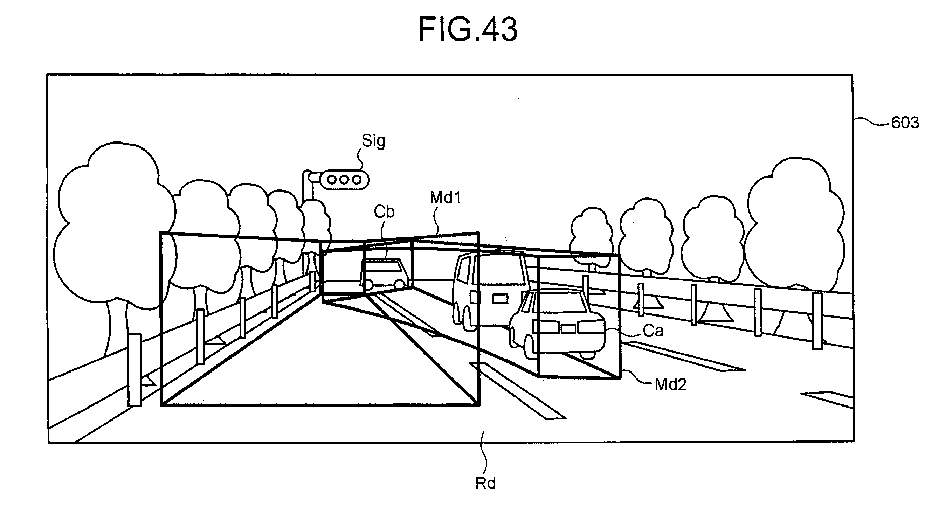

FIG. 42 is a view showing another formation example of three-dimensional space model in Step S509. FIG. 42 shows the case where the vehicle Ca running in the adjacent lane is targeted for forming the three-dimensional space model Md2 as for the region where the vehicle Ca can run within a predetermined hour (vehicle ahead running region). This three-dimensional space model Md2 is formed by considering the case where the vehicle ahead Ca changes the lanes to the running lane of this vehicle in addition to the case where it proceeds straight. FIG. 43 shows a display example when the processing region is set by projecting the three-dimensional space models Md1 and Md2 on the image picked up by the imaging unit 10. As illustrated in the display image 603 of FIG. 43, a plurality of processing regions may be set in one image by projecting a plurality of three-dimensional space models on it.

After Step S511, the image processing unit 424 performs the predetermined image processing on the target region (Step S513). In the case of the display image 603, the three-dimensional space model Md1 indicating the region where this own vehicle can run and the three-dimensional space model Md2 indicating the region where the vehicle ahead can run partially overlap with each other. When detecting the vehicle Ca entering the region where this vehicle can run (Md1), the output unit 40 issues a warning message or a warning sound as the post processing. Also, when detecting the vehicle Ca deviating from the region where the vehicle ahead can run (Md2), this is notified by the output unit 40.

According to the fifth embodiment of the above-mentioned invention, it is possible to calculate a distance from the imaging position to the detected object, predict the relative position of the object toward this vehicle at a elapse of predetermined time by using the distance to the object included in the image picked up, at least, at the two different times, of a plurality of the images including the object, form a three-dimensional space model by using at least one of the current situation of this vehicle and the current situation of its surroundings according to the movement of this vehicle together with the prediction result, set the processing region for the image processing by projecting the formed three-dimensional space model on the image, and perform the predetermined image processing on the set processing region, thereby processing various information included in the picked up image in a multiple way.

According to the fifth embodiment, it is possible to narrow down the range (processing region) for performing the predetermined image processing after detecting an object, by predicting the future position of the object using the three-dimensional movement vector and forming a three-dimensional space model based on the prediction result in order to set the processing region, hence to realize the rapid and effective image processing, similarly to the first embodiment.

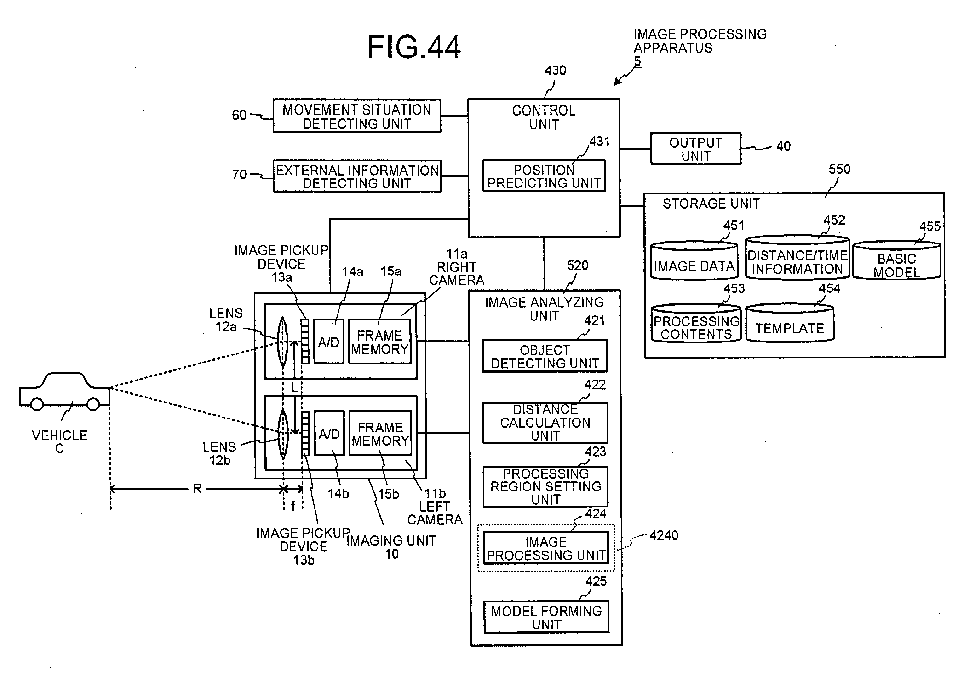

When forming the three-dimensional space model in the above Step S509, a substance other than the object (non-object) in Step S501, the movement situation of this vehicle (speed, acceleration, and the like), or the external information outside this vehicle (road surface situation, weather, and the like) may be detected and the detection result may be used for the model forming processing. At this time, as illustrated in FIG. 44, the image processing apparatus 6 may be further provided with a movement situation detecting unit 60 which detects the movement situation of this vehicle and an external information detecting unit 70 which detects the external information outside this vehicle. The movement situation detecting unit 60 and the external information detecting unit 70 are realized by various kinds of sensors depending on the contents to be detected. The other components of the image processing apparatus 6 are the same as those of the image processing apparatus 5.

Sixth embodiment

A sixth embodiment of the invention will be described in the following. Although a stereo image is taken by two cameras; the right camera 11a and the left camera 11b in the first to the fifth embodiments, the sixth embodiment comprises a pair of optical waveguide systems and the imaging regions corresponding to the respective optical waveguide systems, in which a stereo image is picked up by the image pickup device for converting the light signals guided by the respective optical waveguide systems into electric signals in the respective imaging regions.

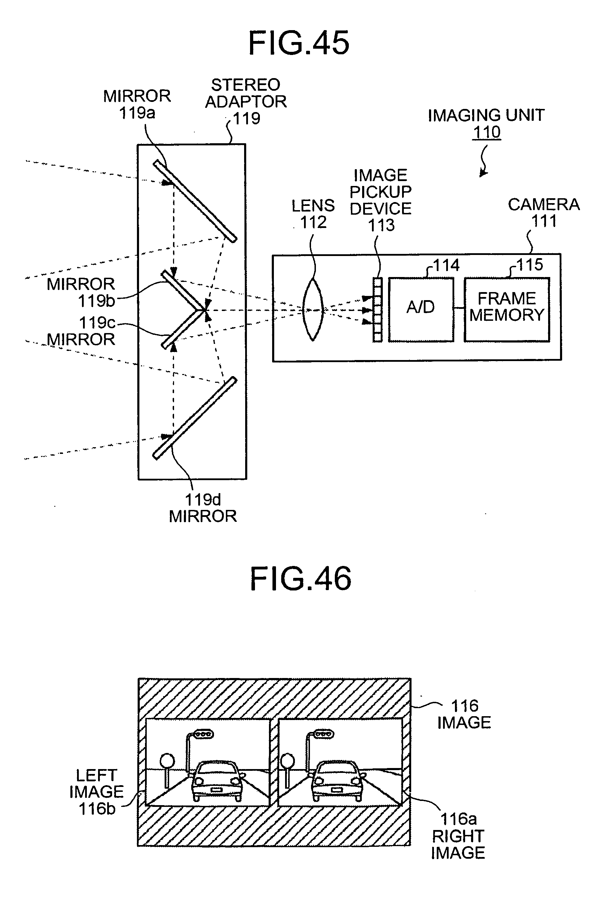

FIG. 45 is a block diagram showing one part of an image processing apparatus according to the sixth embodiment of the invention. An imaging unit 110 in FIG. 45 is an imaging unit provided in the image processing apparatus of the sixth embodiment, instead of the imaging unit 10 of the above-mentioned image processing apparatus 1. The other structure of the image processing apparatus than that shown in FIG. 45 is the same as that of one of the above-mentioned the first to the fifth embodiments.

The imaging unit 110 includes a camera 111 as an image pickup device having the same structure and function as those of the right camera 11a and the left camera 11b of the imaging unit 10. The camera 111 includes a lens 112, an image pickup device 113, an A/D converting unit 114, and a frame memory 115. Further, the imaging unit 110 is provided with a stereo adaptor 119 as a pair of the optical waveguide systems formed by mirrors 119a to 119d, in front of the camera 111. The stereo adaptor 119 includes a pair of the mirrors 119a and 119b with their reflective surfaces facing each other substantially in parallel and another pair of the mirrors 119c and 119d with their reflective surfaces facing each other substantially in parallel, as shown in FIG. 45. The stereo adaptor 119 is provided with two pairs of the mirror systems symmetrically with respect to the optical axis of the lens 112.

In the imaging unit 110, the two pairs of the right and left mirror systems of the stereo adaptor 119 receive the light from an object positioned within the imaging view, the light is concentrated on the lens 112 as an imaging optical system, and the image of the object is taken by the image pickup device 113. At this time, as illustrated in FIG. 46, the image pickup device 113 picks up the right image 116a passing through the right pair of the mirror system consisting of the mirrors 119a and 119b and the left image 116b passing through the left pair of the mirror system consisting of the mirrors 119c and 119d in the imaging regions shifted to the right and left so as not to overlap with each other (the technique using this stereo adaptor is disclosed in, for example, Japanese Patent Application Laid-Open No. H8-171151).

In the imaging unit 110 according to the sixth embodiment, since a stereo image is picked up by one camera provided with the stereo adaptor, it is possible to make the imaging unit simple and compact, compared with the case of picking up the stereo image by two cameras, to reinforce the mechanical strength, and to pick up the right and left images always in a relatively stable state. Further, since the right and left images are picked up by using the common lens and image pickup device, it is possible to restrain the variation in quality caused by a difference of the individual parts and to reduce a trouble of calibration and troublesome assembly work such as alignment.

Although FIG. 45 shows, as the structure of the stereo adaptor, the combination example of the flat mirrors facing in substantially parallel, a group of lenses may be combined, reflective mirrors having some curvature such as a convex mirror and a concave mirror may be combined, or the reflective surface may be formed by prism instead of the reflective mirror.

As illustrated in FIG. 46, although the right and left images are picked up so as not to overlap with each other in the sixth embodiment, one or all of the right and left images may overlap with each other. For example, the above images are picked up by a shutter and the like provided in the light receiving unit while switching the receiving lights between the right and left images, and the right and left images picked up with a small time lag may be processed as the stereo image.

Although the sixth embodiment is formed to pick up the right and left images shifted to the right and left, the flat mirrors of the stereo adaptor may be combined with each other substantially at right angles and the right and left images may be picked up while being shifted upward and downward.

Other Embodiments

The preferred embodiments of the invention have been described so far, but the invention is not limited to the first to the sixth embodiments. For example, although the imaging unit 10 of each of the first to the fifth embodiments or the imaging unit 110 of the sixth embodiment is formed such that a pair of the light receiving units of the camera or the stereo adaptor are aligned horizontally on the both sides, they may be vertically aligned up and down or they may be aligned in the slanting direction.

As the stereo camera of the imaging unit, a stereo camera of compound eyes, for example, three-eyed stereo camera, or a four-eyed stereo camera may be used. It is known that the highly reliable and stable processing result can be obtained in the three-dimensional reconfiguration processing by using the three-eyed or four-eyed stereo camera (refer to "Versatile Volumetric Vision System VVV" written by Fumiaki Tomita, in the Information Processing Society of Japan Transactions "Information Processing", Vol. 42, No. 4, pp. 370-375 (2001)). Especially, when a plurality of cameras are arranged to have basic lines in the two directions, it is known that the three-dimension reconfiguration is enabled at more complicated scene. When a plurality of cameras are arranged in the direction of one basic line, a stereo camera of multi base line method can be realized, hence to enable more accurate stereo measurement.

As the camera of the imaging unit, a single eyed camera may be used instead of the stereo camera of compound eyes. In this case, it is possible to calculate a distance to an object within the imaging view, by using the three-dimensional reconfiguration technique such as a shape from focus method, a shape from defocus method, a shape from motion method, a shape from shading method, and the like.

Here, the shape from focus method is a method of obtaining a distance from the focus position of the best focus. The shape from defocus method is a method of obtaining a relative fading amount from a plurality of images of various focus distances and obtaining a distance according to the correlation between the fading amount and the distance. The shape from motion method is a method of obtaining a distance to an object according to the track of a predetermined feature point in a plurality of temporally sequential images. The shape from shading method is a method of obtaining a distance to an object according to the shading in an image, the reflection property and the light source information of a target object.

The image processing apparatus of the invention can be mounted on a vehicle other than the four-wheeled vehicle, such as an electric wheelchair. Further, it can be mounted on a movable object such as a human and a robot, other than the vehicle. Further, the whole image processing apparatus does not have to be mounted on the movable object, but, for example, the imaging unit and the output unit may be mounted on the movable object, the other components may be formed outside of the movable object, and the both may be connected through wireless communication.

As apparent from the above description, the invention is to include various embodiments not shown here, and various kinds of modifications in design may be possible within the range not departing from the technical spirits specified by the claims.

INDUSTRIAL APPLICABILITY

As mentioned above, the image processing apparatus, the image processing method, and the image processing program according to the invention are very useful in recognizing a vehicle ahead running in front of a user's own vehicle or an object standing ahead of the own vehicle by picking up the image ahead of the own vehicle and especially, the invention is suitable as a device mounted on a vehicle.

**Claims**

**1.** An image processing apparatus comprising:

an imaging unit that picks up a predetermined view to create an image;

a processing region setting unit that sets a region to be processed in the image created by the imaging unit; and a processing calculating unit that performs a predetermined processing calculation on the region set by the processing region setting unit.

2. The image processing apparatus according to claim 1, further comprising:

an identification unit that identifies a region occupied by an object included in the view and a type of the object based on an image signal group included in the image created by the imaging unit, wherein the processing region setting unit includes a calculation range setting unit that sets a calculation range for calculating a distance to the object based on an identification result by the identification unit, and the processing calculating unit includes a distance calculation unit that performs a distance calculation in the calculation range set by the calculation range setting unit.

3. The image processing apparatus according to claim 2, wherein the identification unit obtains vertical direction information indicating a boundary of the object within the view in a vertical direction and horizontal direction information indicating the boundary of the object within the view in a horizontal direction, based on the image signal group, and identifies a region occupied by the object within the view by combination of the vertical direction information and the horizontal direction information.

4. The image processing apparatus according to claim 2, wherein the identification unit identifies the type of the object based on the region occupied by the object within the view.

5. The image processing apparatus according to claim 2, wherein the calculation range setting unit sets the calculation range based on the region occupied by a predetermined type of the object within the view, of types of objects identified by the identification unit.

6. The image processing apparatus according to claim 2, wherein the calculation range setting unit sets the calculation range corresponding to a region obtained by adding a predetermined margin to the region occupied by the object identified by the identification unit within the view.

7. The image processing apparatus according to claim 2, wherein the imaging unit creates a first image signal group picked up through a first optical path and a second image signal group picked up through a second optical path, the processing calculating unit detects from the second image signal group an image signal which matches an arbitrary image signal of the first image signal group, and the processing calculating unit calculates a distance to the object based on a shift amount from the arbitrary image signal in the detected image signal.

8. The image processing apparatus according to claim 7, wherein the identification unit identifies the region occupied by the object within the view and the type of the object based on one of the first image signal group and the second image signal group.

9. The image processing apparatus according to claim 1, further comprising:

a distance information creating unit that calculates a distance from an imaging position of the imaging unit to all or some component points forming the image, and creates distance information including the calculated distance; and a processing selecting unit that selects an image processing method corresponding to the distance information created by the distance information creating unit, from a plurality of image processing methods, wherein the processing calculating unit includes an image processing unit that performs the image processing on the image by using the image processing method selected by the processing selecting unit.

10. The image processing apparatus according to claim 9, wherein the processing region setting unit includes a distance image creating unit that creates a distance image by superimposing the distance information created by the distance information creating unit on the image, and sets closed regions based on the created distance information, the closed regions being different for each set of component points of the image within a predetermined range of distance from the imaging position.

11. The image processing apparatus according to claim 10, wherein

the processing selecting unit selects an image processing method for each of the closed regions set by the distance image creating unit.

12. The image processing apparatus according to claim 10, further comprising an object detecting unit that detects a predetermined object for each of the closed regions set by the distance image creating unit.

13. The image processing apparatus according to claim 9, further comprising a selecting method changing unit that changes a method for selecting the image processing method in the processing selecting unit.

14. The image processing apparatus according to claim 1, further comprising:

a storage unit which stores therein the image created by the imaging unit together with time information concerning the image;
an object detecting unit that detects a target object for an image processing from the image picked up by the imaging unit;
a distance calculating unit that calculates a distance from an imaging position of the imaging unit to the target object detected by the object detecting unit; and
a position predicting unit that extracts at least two images picked up at different times from the images stored in the storage unit, and predicts a relative position of the target object with respect to the movable object at an elapse of predetermined time by using the extracted at least two images and the distance to the target object in each of the images, wherein
the processing region setting unit sets a processing region to be subjected to the image processing, based on a prediction result by the position predicting unit, and
the processing calculating unit includes an image processing unit that performs a predetermined image processing on the processing region set by the processing region setting unit.

15. The image processing apparatus according to claim 14, further comprising:

a model forming unit that forms a three-dimensional space model to be projected on the image using the prediction result by the position predicting unit, wherein
the processing region setting unit sets the processing region by projecting the three-dimensional space model formed by the model forming unit on the image.

16. The image processing apparatus according to claim 14, further comprising a processing changing unit that changes a method for the image processing to be performed on the processing region set by the processing region setting unit.

17. The image processing apparatus according to claim 14, further comprising an output unit that displays and outputs an image obtained by superimposing a three-dimensional movement of the target object over time detected by the object detecting unit on the image in time series.

18. The image processing apparatus according to claim 14, further comprising a movement situation detecting unit that detects a movement situation including a position or a speed of the movable object, wherein
the position predicting unit uses the position or the speed of the movable object detected by the movement situation detecting unit in order to predict the relative position of the target object with respect to the movable object.

19. The image processing apparatus according to claim 14, further comprising:

a movement situation detecting unit that detects the movement situation including the position of the movable object; and
a map information storage unit that stores therein three-dimensional map information including surroundings of the region where the movable object is moving, wherein
the position predicting unit reads out from the map information storage unit the map information near a current position of the movable object detected by the movement situation detecting unit and refers to the information, in order to predict the relative position of the target object with respect to the movable object.

20. The image processing apparatus according to claim 14, further comprising an external information detecting unit that detects external information outside of the movable object, wherein
the position predicting unit uses the information outside of the movable object detected by the external information detecting unit, in order to predict the relative position of the target object with respect to the movable object.

**21.** The image processing apparatus according to claim 1, wherein
the imaging unit includes

a pair of imaging optical systems; and
a pair of image pickup devices that convert optical signals output by the pair of the imaging optical systems into electric signals.

**22.** The image processing apparatus according to claim 1, wherein
the imaging unit includes

a pair of light guiding optical systems; and
an image pickup device that has imaging regions corresponding respectively to the light guiding optical systems, and converts the optical signals guided by the respective light guiding optical systems into electric signals in the respective imaging regions.

**23.** The image processing apparatus according to claim 1, mounted on a vehicle.

**24.** An image processing method comprising:

an imaging step of picking up a predetermined view to create an image;
a processing region setting step of setting a region to be processed in the image created in the imaging step; and
a processing calculating step of performing a predetermined processing calculation on the region set in the processing region setting step.

**25.** The image processing method according to claim 24, further comprising:

an identification step of identifying a region occupied by an object included in the view and a type of the object based on an image signal group included in the image created in the imaging step, wherein
in the processing region setting step, a calculation range for calculating a distance to the object is set based on an identification result in the identification step, and
in the processing calculating step, a distance calculation is performed in the calculation range set in the processing region setting step.

**26.** The image processing method according to claim 24, further comprising:

a distance information creating step of calculating a distance from an imaging position in the imaging step to all or some component points forming the image, and creating distance information including the calculated distance; and
a processing selecting step of selecting an image processing method corresponding to the distance information created in the distance information creating step, from a plurality of image processing methods, wherein
in the processing calculating step, the image processing is performed on the image by using the image processing method selected in the processing selecting step.

**27.** The image processing method according to claim 24, further comprising:

a storing step of storing the image created in the imaging step together with time information concerning the image;
an object detecting step of detecting a target object for an image processing from the image picked up in the imaging step;
a distance calculating step of calculating a distance from an imaging position in the imaging step to the target object detected in the object detecting step; and
a position predicting step of extracting at least two images picked up at different times from the images stored in the storing step, and predicting a relative position of the target object with respect to the movable object at an elapse of predetermined time by using the extracted at least two images and the distance to the target object in each of the images, wherein
in the processing region setting step, a processing region to be subjected to the image processing is set based on a prediction result in the position predicting step, and
in the processing calculating step, a predetermined image processing is performed on the processing region set in the processing region setting step.

28. An image processing program for performing an image processing on an image created by an imaging unit that picks up a predetermined view to create the image, comprising:

a processing region setting step of setting a region to be processed in the image; and
a processing calculating step of performing a predetermined processing calculation on the region set in the processing region setting step.

29. The image processing program according to claim 28, further comprising an identification step of identifying a region occupied by an object within the view and a type of the object, based on each image signal group included in the image created by the imaging unit, wherein
in the processing region setting step, a calculation range for calculating a distance to the object is set based on an identification result in the identification step, and
in the processing calculation step, a distance calculation is performed in the calculation range set in the processing region setting step.

30. The image processing program according to claim 28, further comprising:

a distance information creating step of calculating a distance from an imaging position of the imaging unit to all or some component points forming the image, and creating distance information including the calculated distance, and
a processing selecting step of selecting an image processing method corresponding to the distance information created in the distance information creating step, from a plurality of image processing methods, wherein
in the processing calculation step, the image processing is performed on the image by using the image processing method selected in the processing selecting step.

31. The image processing program according to claim 28, further comprising:

a storing step of storing the image created by the imaging unit together with time information concerning the image;
an object detecting step of detecting a target object for an image processing from the image picked up by the imaging unit;
a distance calculating step of calculating a distance from an imaging position of the imaging unit to the target object detected in the object detecting step; and
a position predicting step of extracting at least two images picked up at different times from the images stored in the storing step, and predicting a relative position of the target object with respect to the movable object at an elapse of predetermined time by using the extracted at least two images and the distance to the target object in each of the images, wherein
in the processing region setting step, a processing region to be subjected to the image processing is set based on a prediction result in the position predicting step, and
in the processing calculating step, a predetermined image processing is performed on the processing region set in the processing region setting step.

FIG.1

# FIG.2

START

IMAGING PROCESSING — S101

IDENTIFICATION PROCESSING — S103

CALCULATION RANGE SETTING PROCESSING — S105

DISTANCE CALCULATION PROCESSING — S107

DISTANCE INFORMATION OUTPUT — S109

END

# FIG.3

# FIG.4

LEFT IMAGE REGION    RIGHT IMAGE REGION

Iab

# FIG.5

Iab

# FIG.6

```
    ┌─────────────────────┐
    │   IDENTIFICATION    │
    │    PROCESSING       │
    └─────────────────────┘
              │
              ▼
    ┌─────────────────────┐
    │   REGION DIVIDING   │  ── S122
    │    PROCESSING       │
    └─────────────────────┘
              │
              ▼
    ┌─────────────────────┐
    │ OBJECT IDENTIFICATION│  ── S124
    │    PROCESSING       │
    └─────────────────────┘
              │
              ▼
    ┌─────────────────────┐
    │   IDENTIFICATION    │  ── S126
    │ INFORMATION OUTPUT  │
    └─────────────────────┘
              │
              ▼
    ┌─────────────────────┐
    │      RETURN         │
    └─────────────────────┘
```

# FIG.7

VEHICLE
C1

VEHICLE
C2

IMAGE
17

HUMAN
H1

# FIG.8

VERTICAL-EDGE
EXTRACTING FILTER
F1

| 1 | 1 | 0 | -1 | -1 |
|---|---|---|----|----|
| 1 | 1 | 0 | -1 | -1 |
| 1 | 1 | 0 | -1 | -1 |
| 1 | 1 | 0 | -1 | -1 |
| 1 | 1 | 0 | -1 | -1 |

# FIG.9

HORIZONTAL-EDGE
EXTRACTING FILTER
F2

| 1 | 1 | 1 | 1 | 1 |
|---|---|---|---|---|
| 1 | 1 | 1 | 1 | 1 |
| 0 | 0 | 0 | 0 | 0 |
| -1 | -1 | -1 | -1 | -1 |
| -1 | -1 | -1 | -1 | -1 |

# FIG.10

EDGE EXTRACTED IMAGE
22a

# FIG.11

EDGE EXTRACTED IMAGE
22b

# FIG.12

EDGE INTEGRATED IMAGE
22c

# FIG.13

REGION DIVIDED
IMAGE
22d

REGION
Sa1

REGION
Sb

Sa2
REGION

# FIG.14

REGION
Sa1

VEHICLE
TEMPLATE
52ec1

REGION
Sa2

VEHICLE
TEMPLATE
52ec2

REGION
DIVIDED IMAGE
22d

HUMAN
TEMPLATE
52eh

REGION
Sb

# FIG.15

VEHICLE
REGION
Sac1

IDENTIFICATION
INFORMATION
53a

HUMAN
REGION
Sbh

Sac2
VEHICLE REGION

# FIG.16

```
      ┌─────────────────────────┐
      │   CALCULATION RANGE      │
      │  SETTING PROCESSING      │
      └─────────────────────────┘
                  │
                  ▼
      ┌─────────────────────────┐
      │    IDENTIFICATION        │
      │    INFORMATION           │  ～S142
      │    PROCESSING            │
      └─────────────────────────┘
                  │
                  ▼
      ┌─────────────────────────┐
      │   CALCULATION RANGE      │  ～S144
      │      SETTING             │
      └─────────────────────────┘
                  │
                  ▼
      ┌─────────────────────────┐
      │  SETTING INFORMATION     │  ～S146
      │       OUTPUT             │
      └─────────────────────────┘
                  │
                  ▼
      ┌─────────────────────────┐
      │        RETURN            │
      └─────────────────────────┘
```

# FIG.17

VEHICLE
REGION
Sacb1

VEHICLE IDENTIFICATION
REGION  INFORMATION
Sacb2     53b

HUMAN
REGION
Sbhb

# FIG.18

CALCULATION    CALCULATION
RANGE           RANGE        CALCULATION
23ac1            23ac2          RANGE
                              INFORMATION
                                   23a

CALCULATION
RANGE
23bh

# FIG.19

DISTANCE
CALCULATION RESULT
54bh

DISTANCE
CALCULATION
RESULT
54ac1

DISTANCE
CALCULATION
RESULT
54ac2

DISTANCE
INFORMATION
54a

| 8 | 8 | 8 |
|---|---|---|
| 8 | 8 | 8 |
| 8 | 8 | 8 |
| 7.5 | 7.5 | 7.5 |
| 7.5 | 7.5 | 7.5 |

| 16 | 16 |
|----|----|
| 15.5 | 15.5 |
| 15 | 15 |

| 5.5 | 5.4 |
|-----|-----|
| 5 | 5 |
| 5 | 5 |
| 5 | 5 |

# FIG.20

# FIG.21

IMAGE PROCESSING APPARATUS 2

RADAR 260

VEHICLE C

LENS 12a

LENS 12b

R

f

IMAGE PICKUP DEVICE 13a

13b IMAGE PICKUP DEVICE

A/D 14a

FRAME MEMORY 15a

RIGHT CAMERA 11a

A/D 14b

FRAME MEMORY 15b

11b LEFT CAMERA

10 IMAGING UNIT

CONTROL UNIT 130

OUTPUT UNIT 40

IMAGE ANALYZING UNIT 220

PROCESSING CONTROL UNIT 21

IDENTIFICATION UNIT 22

CALCULATION RANGE SETTING UNIT 23

230

MEMORY 25

STORAGE UNIT 50

IMAGE INFORMATION 51

TEMPLATE INFORMATION 52

IDENTIFICATION INFORMATION 53

DISTANCE INFORMATION 54

EP 1 901 225 A1

# FIG.22

IMAGE PROCESSING APPARATUS 3

OUTPUT UNIT 40

STORAGE UNIT 350
- IMAGE DATA 351
- DISTANCE INFORMATION 352
- IMAGE PROCESSING METHOD 353
- TEMPLATE 354

CONTROL UNIT 330
- PROCESSING SELECTING UNIT 331

IMAGE ANALYZING UNIT 320
- DISTANCE INFORMATION CREATING UNIT 321
- DISTANCE IMAGE CREATING UNIT 322 — 3220
- IMAGE PROCESSING UNIT 323 — 3230

11a RIGHT CAMERA
11b LEFT CAMERA

IMAGE PICKUP IMAGING UNIT 10

FRAME MEMORY 15a
A/D 14a
IMAGE PICKUP DEVICE 13a
LENS 12a

FRAME MEMORY 15b
A/D 14b
IMAGE PICKUP DEVICE 13b
LENS 12b

L
f
R

VEHICLE C

40

# FIG.23

```
        ┌──────────┐
        │  START   │
        └────┬─────┘
             │
             ▼
  ┌─────────────────────┐
  │ IMAGING PROCESSING  │──S301
  └──────────┬──────────┘
             │
             ▼
  ┌─────────────────────┐
  │ DISTANCE INFORMATION│──S303
  │      CREATING       │
  └──────────┬──────────┘
             │
             ▼
  ┌─────────────────────┐
  │   DISTANCE IMAGE    │──S305
  │      CREATING       │
  └──────────┬──────────┘
             │
             ▼
  ┌─────────────────────┐
  │ PROCESSING SELECTING│──S307
  └──────────┬──────────┘
             │
             ▼
  ┌─────────────────────┐
  │  IMAGE PROCESSING   │──S309
  └──────────┬──────────┘
             │
             ▼
        ┌──────────┐
        │   END    │
        └──────────┘
```

# FIG.24

301

# FIG.25

81

| DETECTION RANGE | OBJECT | IMAGE PROCESSING METHOD |
|---|---|---|
| 0~50m | ROAD SURFACE | UNDERSTANDING SITUATION OF ROAD AHEAD |
| 10~50m | WHITE LINE | UNDERSTANDING RUNNING LANE (WARNING AT THE DEVIATION FROM LANE) |
| 30~70m | VEHICLE | UNDERSTANDING VEHICLE AHEAD (WARNING AT DANGER) |
| 50~100m | HUMAN | UNDERSTANDING PEDESTRIAN (WARNING AT DANGER) |
| 70~150m | SIGN | RECOGNIZING EFFECTIVE SIGN (TRAFFIC SIGNAL ETC) |
| 150m~ | SKY | RECOGNIZING BRIGHTNESS AND WEATHER (NOTIFY AT CHANGE) |

# FIG.26

GO STRAIGHT

401

# FIG.27

YOU WILL DEVIATE FROM
THE LANE RIGHTWARD

402

# FIG.28

40m

PUT ON THE BRAKE

403

## FIG.29

70m

404

AVOID A PERSON

## FIG.30

120m

405

TRAFFIC SIGNAL AHEAD

## FIG.31

406

TURN ON THE LIGHT

# FIG.32

IMAGE
PROCESSING
APPARATUS
4

430

CONTROL UNIT

431

POSITION
PREDICTING UNIT

OUTPUT
UNIT ~ 40

450

STORAGE UNIT
451          452

IMAGE DATA    DISTANCE/TIME
              INFORMATION

453          454

PROCESSING    TEMPLATE
CONTENTS

IMAGE PICKUP
DEVICE
13a         14a    15a

11a
RIGHT
CAMERA

420

LENS
12a

A/D    FRAME
       MEMORY

L

IMAGE ANALYZING
UNIT
421

OBJECT
DETECTING UNIT

422

DISTANCE
CALCULATION
UNIT

423

PROCESSING
REGION SETTING
UNIT

424

IMAGE
PROCESSING UNIT

4240

LENS
12b

A/D    FRAME
       MEMORY

VEHICLE
C

R

f

14b    15b    11b
LEFT
CAMERA

IMAGE PICKUP
DEVICE
13b

IMAGING UNIT
10

EP 1 901 225 A1

# FIG.33

```
        START
          │
          ▼                    S401
┌──────────────────────┐
│  IMAGING PROCESSING  │
└──────────────────────┘
          │
          ▼                    S403
┌──────────────────────┐          ┌──────────────┐  454
│   OBJECT DETECTION   │◀ ─ ─ ─ ─ │   TEMPLATE   │
└──────────────────────┘          └──────────────┘
          │
          ▼                    S405
┌──────────────────────┐          ┌──────────────────┐  452
│ DISTANCE CALCULATION │─ ─ ─ ─ ─▶│  DISTANCE/TIME   │
│      TO OBJECT       │          │   INFORMATION    │
└──────────────────────┘          └──────────────────┘
          │                                │
          ▼                    S407        ▼
┌──────────────────────┐          ┌ ─ ─ ─ ─ ─ ─ ─ ─ ─ ─ ─ ┐
│   FUTURE POSITION    │◀ ─ ─ ─ ─   ┌────────┐   ┌────────┐
│     PREDICTION       │          │ │ $t_{n-1}$ │   │  $t_n$  │ │
└──────────────────────┘            └────────┘   └────────┘
          │                        └ ─ ─ ─ ─ ─ ─ ─ ─ ─ ─ ─ ┘
          ▼                    S409   $452_{n-1}$        $452_n$
┌──────────────────────┐
│  PROCESSING REGION   │
│      SETTING         │
└──────────────────────┘
          │
          ▼                    S411
┌──────────────────────┐
│   IMAGE PROCESSING   │
└──────────────────────┘
          │
          ▼
         END
```

## FIG.34

## FIG.35

# FIG.36

PUT ON THE BRAKE

503
D
C

# FIG.37

IMAGE PROCESSING
APPARATUS
5

430

CONTROL
UNIT

431

POSITION
PREDICTING UNIT

OUTPUT
UNIT ──40

550

STORAGE UNIT

451    452    455

IMAGE DATA    DISTANCE/TIME
INFORMATION    BASIC
MODEL

453    454

PROCESSING
CONTENTS    TEMPLATE

IMAGE PICKUP
DEVICE
13a

LENS
12a

14a    15a

A/D    FRAME
MEMORY

11a
RIGHT
CAMERA

520

IMAGE ANALYZING
UNIT

421

OBJECT
DETECTING UNIT

422

DISTANCE
CALCULATION
UNIT

423

PROCESSING
REGION SETTING
UNIT

424

IMAGE
PROCESSING UNIT ──4240

425

MODEL FORMING
UNIT

LENS
12b

A/D    FRAME
MEMORY

14b    15b    11b
LEFT
CAMERA

VEHICLE
C

R    f

IMAGE PICKUP
DEVICE    IMAGING UNIT
13b    10

EP 1 901 225 A1

# FIG.38

START

S501
IMAGING PROCESSING

S503
OBJECT DETECTION ◄-------- TEMPLATE ~454

S505
DISTANCE CALCULATION
TO OBJECT -------► DISTANCE/TIME
INFORMATION ~452

S507
FUTURE POSITION
PREDICTION ◄-------- $t_{n-1}$ ~$452_{n-1}$   $t_n$ ~$452_n$

S509
SPACE MODEL FORMING ◄-------- BASIC MODEL ~455

S511
PROCESSING REGION
SETTING ◄------- THREE-
DIMENSIONAL
SPACE MODEL ~Md1

S513
IMAGE PROCESSING

END

## FIG.39

EP 1 901 225 A1

EP 1 901 225 A1

# FIG.40

Md1

Rd

# FIG.41

EP 1 901 225 A1

EP 1 901 225 A1

# FIG.42

Md2

Rd

# FIG.43

EP 1 901 225 A1

# FIG.44

IMAGE PROCESSING APPARATUS
5

60 — MOVEMENT SITUATION DETECTING UNIT

430
CONTROL UNIT

431
POSITION PREDICTING UNIT

OUTPUT UNIT — 40

70 — EXTERNAL INFORMATION DETECTING UNIT

550
STORAGE UNIT

451
IMAGE DATA

452
DISTANCE/TIME INFORMATION

455
BASIC MODEL

453
PROCESSING CONTENTS

454
TEMPLATE

IMAGE PICKUP DEVICE 13a

14a    15a

11a RIGHT CAMERA

LENS 12a

A/D    FRAME MEMORY

VEHICLE C

L

LENS 12b

A/D    FRAME MEMORY

14b    15b

11b LEFT CAMERA

R

f

IMAGE PICKUP DEVICE 13b

IMAGING UNIT 10

520
IMAGE ANALYZING UNIT

421
OBJECT DETECTING UNIT

422
DISTANCE CALCULATION UNIT

423
PROCESSING REGION SETTING UNIT

424
IMAGE PROCESSING UNIT

4240

425
MODEL FORMING UNIT

EP 1 901 225 A1

# FIG.45

MIRROR
119a

STEREO
ADAPTOR
119

IMAGING UNIT
110

IMAGE
PICKUP
DEVICE
113

LENS
112

CAMERA
111

114

115

A/D

FRAME
MEMORY

MIRROR
119b

119c
MIRROR

119d
MIRROR

# FIG.46

116
IMAGE

LEFT
IMAGE
116b

116a
RIGHT
IMAGE

| **INTERNATIONAL SEARCH REPORT** | International application No. |
|---|---|
| | PCT/JP2006/309420 |

**A. CLASSIFICATION OF SUBJECT MATTER**
*G06T1/00*(2006.01)i, *G01B11/00*(2006.01)i, *G01B11/24*(2006.01)i, *G01C3/06*
(2006.01)i, *G06T7/20*(2006.01)i, *G08G1/16*(2006.01)i, *H04N7/18*(2006.01)i

According to International Patent Classification (IPC) or to both national classification and IPC

**B. FIELDS SEARCHED**

Minimum documentation searched (classification system followed by classification symbols)
G06T1/00, G01B11/00, G01B11/24, G01C3/06, G06T7/20, G08G1/16, H04N7/18

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 9-264954 A (Fujitsu Ten Ltd.),<br>07 October, 1997 (07.10.97),<br>Par. Nos. [0014] to [0016], [0030], [0031]<br>(Family: none) | 1,23,24,28<br>2-22,25-27,<br>29-31 |
| Y | JP 7-182484 A (Nissan Motor Co., Ltd.),<br>21 July, 1995 (21.07.95),<br>Par. Nos. [0006] to [0014]<br>(Family: none) | 2-8,25,21,29 |
| Y | JP 9-272414 A (Mitsubishi Electric Corp.),<br>21 October, 1997 (21.10.97),<br>Par. Nos. [0025], [0041]<br>(Family: none) | 6-8,21 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 July, 2006 (25.07.06) | 01 August, 2006 (01.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/309420 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-257837 A  (Olympus Corp.),<br>16 September, 2004 (16.09.04),<br>Par. Nos. [0020], [0106] to [0111]<br>(Family: none) | 9-13,22,26,<br>30 |
| Y | JP 10-283462 A  (Fuji Heavy Industries Ltd.),<br>23 October, 1998 (23.10.98),<br>Par. Nos. [0078] to [0097]<br>(Family: none) | 14-20,27,31 |
| Y | JP 2003-63340 A  (Aisin Seiki Co., Ltd.),<br>05 March, 2003 (05.03.03),<br>Par. No. [0029]<br>& US 2003/0060972 A1    & EP 001288072 A2 | 15,17 |
| Y | JP 2005-98853 A  (Toyota Motor Corp.),<br>14 April, 2005 (14.04.05),<br>Par. Nos. [0045] to [0047]<br>(Family: none) | 19,20 |
| A | JP 7-302325 A  (Suzuki Motor Corp.),<br>14 November, 1995 (14.11.95),<br>Par. Nos. [0002], [0029] to [0035], [0041] to [0045]<br>(Family: none) | 1-31 |
| A | JP 11-16099 A  (Hitachi, Ltd.),<br>22 January, 1999 (22.01.99),<br>Par. Nos. [0023] to [0028]<br>(Family: none) | 1-31 |
| A | JP 2002-74598 A  (Hitachi, Ltd.),<br>15 March, 2002 (15.03.02),<br>All pages<br>& US 2002/0026274 A1 | 1-31 |
| A | JP 2000-90243 A  (Yazaki Corp.),<br>31 March, 2000 (31.03.00),<br>All pages<br>& US 006466684 B1 | 1-31 |
| A | JP 2002-83297 A  (Matsushita Electric Industrial Co., Ltd.),<br>22 March, 2002 (22.03.02),<br>All pages<br>& US 2002/0001398 A1    & EP 001179803 A3 | 1-31 |
| A | JP 2002-112252 A  (Toshiba Corp.),<br>12 April, 2002 (12.04.02),<br>All pages<br>& US 2002/0036692 A1 | 1-31 |

Form PCT/ISA/210 (continuation of second sheet) (April 2005)

**INTERNATIONAL SEARCH REPORT**

| International application No. |
|---|
| PCT/JP2006/309420 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-177513 A  (Toyoda Automatic Loom Works, Ltd.),<br>27 June, 2000 (27.06.00),<br>Par. Nos. [0080] to [0088]<br>(Family: none) | 1-31 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2635246 B
- JP 3290318 B

- JP H8171151 A

**Non-patent literature cited in the description**

- **FUMIAKI TOMITA.** Versatile Volumetric Vision System VVV. *Information Processing Society of Japan Transactions ''Information Processing,* 2001, vol. 42 (4), 370-375